# EUROPEAN PATENT APPLICATION

(11) **EP 4 797 600 A1**
(43) Date of publication of application: **26.08.2026**
(21) Application number: 23955766.3
(22) Date of filing: 19.10.2023
(51) Int. Cl.: H04L 5/00

(54) **CONFIGURATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: XIAO, Han, Dongguan, Guangdong 523860 (CN); SHEN, Jia, Dongguan, Guangdong 523860 (CN)
(74) Representative: Novagraaf Technologies
(86) International application number: PCT/CN2023/125508
(87) International publication number: WO 2025/081440

(57) **Abstract**

The present application relates to a configuration method, a terminal device, a network device, a chip, a computer-readable storage medium, a computer program product, a computer program, and a communication system. The configuration method comprises: a terminal device receives first configuration information sent by a network device, wherein the first configuration information is used for the terminal device to determine a first mapping relationship, and the first mapping relationship comprises a mapping relationship between a first reference signal configuration and a first AI configuration. According to embodiments of the present application, the channel estimation performance can be improved, and the reference signal overhead can be reduced.

## Description

### TECHNICAL FIELD

The present disclosure relates to the field of communications, and in particular, to configuration methods, terminal devices, network devices, chips, computer-readable storage mediums, computer program products, computer programs, and a communication system.

### RELATED ART

Due to the complexity and time-varying nature of wireless channel environments, channel estimation and recovery performed by a receiver in wireless communication systems directly impact the recovery performance of received data. In general, the receiver performs channel estimation based on reference signals. How to improve channel estimation performance remains a topic of great concern in the field of communications.

### SUMMARY

Embodiments of the present disclosure provide configuration methods, terminal devices, network devices, chips, computer-readable storage mediums, computer program products, computer programs, and a communication system.

Some embodiments of the present disclosure provide a configuration method. The method is performed by a terminal device, and includes:
receiving first configuration information from a network device, wherein the first configuration information is used for the terminal device to determine a first mapping relationship, wherein the first mapping relationship includes a mapping relationship between a first reference signal configuration and a first artificial intelligence (AI) configuration.

Some embodiments of the present disclosure provide a configuration method. The method is performed by a network device, and includes:
transmitting first configuration information to a terminal device, wherein the first configuration information is used for the terminal device to determine a first mapping relationship, wherein the first mapping relationship includes a mapping relationship between a first reference signal configuration and a first AI configuration.

Some embodiments of the present disclosure provide a terminal device. The terminal device includes a first communication module, configured to receive first configuration information from a network device, wherein the first configuration information is used for the terminal device to determine a first mapping relationship, wherein the first mapping relationship includes a mapping relationship between a first reference signal configuration and a first AI configuration.

Some embodiments of the present disclosure provide a network device. The network device includes a second communication module, configured to transmit first configuration information to a terminal device, wherein the first configuration information is used for the terminal device to determine a first mapping relationship, wherein the first mapping relationship includes a mapping relationship between a first reference signal configuration and a first AI configuration.

Some embodiments of the present disclosure provide a terminal device. The terminal device includes a transceiver, a processor, and a memory, wherein the memory is configured to store one or more computer programs, the transceiver is configured to communicating with other devices, and the processor is configured to call and run the one or more computer programs stored in the memory to cause the terminal device to perform the configuration method described above.

Some embodiments of the present disclosure provide a network device. The network device includes a transceiver, a processor, and a memory, wherein the memory is configured to store one or more computer programs, the transceiver is configured to communicating with other devices, and the processor is configured to call and run the one or more computer programs stored in the memory to cause the terminal device to perform the configuration method described above.

Some embodiments of the present disclosure provide a chip. The chip is configured to perform the configuration method described above.

Specifically, the chip includes a processor, wherein the processor is configured to call and run one or more computer programs from a memory to cause a device equipped with the chip to perform the configuration method described above.

Some embodiments of the present disclosure provide a computer-readable storage medium. The computer-readable storage medium is configured to store one or more computer programs, which when loaded and run by a device, cause the device to perform the configuration method described above.

Some embodiments of the present disclosure provide a computer program product. The computer program product includes one or more computer program instructions, which are configured to cause a computer to perform the configuration method described above.

Some embodiments of the present disclosure provide a computer program. The computer program is configured to cause a computer to perform the configuration method described above.

Some embodiments of the present disclosure provide a communication system. The communication system includes the terminal device and the network device described above.

In the embodiments of the present disclosure, the network device transmits the first configuration information to the terminal device, and the association between the first reference signal configuration and the first AI configuration is indicated. In this way, the terminal device determines the first mapping relationship between the first reference signal configuration and the first AI configuration, such that the terminal device is prevented from mismatching and using the reference signal configuration and the AI configuration, the channel estimation performance is improved, and the overhead of the reference signal is reduced by performing the receiving process based on the reference signal that matches the AI configuration.

### BRIEF DESCRIPTION OF DRAWINGS

FIG. 1 is a schematic diagram of a communication system according to some embodiments of the present disclosure;
FIG. 2 is a schematic diagram of a basic workflow in a wireless communication system;
FIG. 3 is a schematic diagram of a process of channel estimation and recovery in a communication system;
FIG. 4 is a schematic diagram illustrating patterns of resource allocation for data symbols and pilot symbols under different configurations;
FIG. 5 is a schematic diagram of a neuron node;
FIG. 6 is a schematic diagram of a fully-connected neural network;
FIG. 7 is a schematic diagram of a convolutional neural network;
FIG. 8 is a schematic diagram of a basic structure of a long short-term memory (LSTM) network unit;
FIG. 9 is a schematic diagram of an AI-based channel estimation module;
FIG. 10 is a schematic flowchart of a configuration method according to some embodiments of the present disclosure;
FIG. 11 is a schematic diagram of a superimposed matrix according to some embodiments of the present disclosure;
FIG. 12 is a schematic flowchart of a configuration method according to some embodiments of the present disclosure;
FIG. 13 is a schematic diagram of an application example of associatively using a reference signal configuration and an AI configuration according to some embodiments of the present disclosure;
FIG. 14 is a schematic diagram of an application example of associatively using a reference signal configuration and an AI configuration according to some embodiments of the present disclosure;
FIG. 15 is a schematic diagram of an application example of associatively using a reference signal configuration and an AI configuration according to some embodiments of the present disclosure;
FIG. 16 is a schematic diagram of an application example of associatively using a reference signal configuration and an AI configuration according to some embodiments of the present disclosure;
FIG. 17 is a schematic diagram of an application example of reporting a first capability by a terminal device according to some embodiments of the present disclosure;
FIG. 18 is a schematic diagram of an application example of reporting a first capability by a terminal device according to some embodiments of the present disclosure;
FIG. 19 is a schematic diagram of an application example of reporting a first capability by a terminal device according to some embodiments of the present disclosure;
FIG. 20 is a schematic diagram of an application example of reporting a first capability by a terminal device according to some embodiments of the present disclosure;
FIG. 21 is a schematic diagram of comparison of a traditional reference signal, a non-orthogonal reference signal, and a default reference signal according to some embodiments of the present disclosure;
FIG. 22 is a schematic diagram of an application example of switching configurations according to some embodiments of the present disclosure;
FIG. 23 is a schematic block diagram of a terminal device according to some embodiments of the present disclosure;
FIG. 24 is a schematic block diagram of a terminal device according to some embodiments of the present disclosure;
FIG. 25 is a schematic block diagram of a terminal device according to some embodiments of the present disclosure;
FIG. 26 is a schematic block diagram of a terminal device according to some embodiments of the present disclosure;
FIG. 27 is a schematic block diagram of a network device according to some embodiments of the present disclosure;
FIG. 28 is a schematic block diagram of a communication device according to some embodiments of the present disclosure;
FIG. 29 is a schematic block diagram of a chip according to some embodiments of the present disclosure; and
FIG. 30 is a schematic block diagram of a communication system according to some embodiments of the present disclosure.

### DETAILED DESCRIPTION

The technical solutions according to the embodiments of the present disclosure are described hereinafter in combination with the accompanying drawings for the embodiments of the present disclosure.

The technical solutions according to the embodiments of the present disclosure are applicable to various communication systems, such as a long-term evolution (LTE) system, an advanced long-term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a 5^{th} generation (5G) communication system, a 6^{th} generation (6G) communication system, or other communication systems.

In general, the traditional communication systems support a limited number of connections and is relatively easy to implement. However, with the development of the communication technologies, the mobile communication systems not only support traditional communications, but also support device-to-device (D2D) communications, machine-to-machine (M2M) communications, machine-type communications (MTC), vehicle-to-vehicle (V2V) communications, vehicle-to-everything (V2X) communications, and the like. The embodiments of the present disclosure are also applicable to such communication systems.

In some embodiments, the communication systems are also applicable to a carrier aggregation (CA) scenario, a dual connectivity (DC) scenario, or a standalone (SA) scenario.

In some embodiments, the communication systems are also applicable to an unlicensed spectrum. The unlicensed spectrum may also be considered as a shared spectrum. Alternatively, the communication systems are also applicable to a licensed spectrum. The licensed spectrum may also be considered as a non-shared spectrum.

Various embodiments are described in conjunction with a network device and a terminal device in the embodiments of the present disclosure. The terminal device is also referred to as a user equipment (UE), an access terminal, a subscriber unit, a subscriber station, a rover station, a mobile station, a remote station, a remote terminal, a mobile device, a user terminal, a terminal, a wireless communication device, a user agent, a user apparatus, or the like.

The terminal device may be a station (ST) in the WLAN, for example, a cellular phone, a cordless phone, a Session Initiation Protocol (SIP) phone, a wireless local loop (WLL) STA, a personal digital assistant (PDA), a hand-held device with a wireless communication capability, a computing device or other processing devices connected to a wireless modem, an in-vehicle device, a wearable device, a terminal device in a next generation communication system (e.g., the NR network), a terminal device in an evolved public land mobile network (PLMN) network, or the like.

In the embodiments of the present disclosure, the terminal device is deployed on land (e.g., indoors or outdoors, or handheld, wearable, or vehicle-mounted deployment); or the terminal device may be deployed on water (for example, on a ship); or the terminal device may be deployed in the air (e.g., on an aircraft, a balloon, or a satellite).

In the embodiments of the present disclosure, the terminal device is a mobile phone, a pad, a computer with a radio transceiver function, a virtual reality (VR) terminal device, an augmented reality (AR) terminal device, a wireless terminal device in industrial control, a wireless terminal device in self-driving, a wireless terminal device in remote medical, a wireless terminal in smart grid, a wireless terminal in transportation safety, a wireless terminal in smart city, or a wireless terminal device in smart home.

By way of example but not limitation, in the embodiments of the present disclosure, the terminal device may be a wearable device. The wearable device may also be referred to as a wearable smart device, which is a generic name for wearable devices such as glasses, gloves, watches, clothes, and shoes that are developed by applying wearable technologies for smart designs of daily wearables. The wearable device is a portable device that is directly worn on the body or integrated into clothing or accessories of a user. The wearable device is not only a hardware device, but also implements powerful functions by software support, data exchange, and cloud interaction. Broadly defined, wearable smart devices include full-featured, larger devices such as smart watches and smart glasses, which offer complete or partial functionality without relying on a smart phone, as well as devices that focus on a specific function and require a companion device like a smart phone, such as various smart bracelets and smart jewelry for vital sign monitoring.

In some embodiments of the present disclosure, the network device is a device for communication with a mobile device, and the network device is an access point (AP) in a WLAN, an evolutional node B (eNB or eNode B) in an LTE system, a relay station or an AP, an in-vehicle device, a wearable device, a network device (gNB) in an NR network, a network device in a future evolved PLMN network, or a network device in an NTN network.

By way of example but not limitation, in the embodiments of the present disclosure, the network device has mobile characteristics. For example, the network device is a mobile device. In some embodiments, the network device is a satellite or a balloon station. For example, the satellite is a low Earth orbit (LEO) satellite, a medium Earth orbit (MEO) satellite, a geostationary Earth orbit (GEO) satellite, a high elliptical orbit (HEO) satellite, or the like. In some embodiments, the network device is a base station deployed in locations such as land and water.

In some embodiments of the present disclosure, the network device provides services for cells, and the terminal device communicates with the network device over transmission resources (e.g., frequency domain resources or frequency spectrum resources) used by the cell, which is a cell corresponding to the network device (e.g., base station). The cell is a base station corresponding to a macro base station or a small cell. The small cell herein includes a metro cell, a micro cell, a pico cell, or a femto cell. The small cells are characterized by a small coverage area and low transmission power, which are suitable for providing high-speed data transmission services.

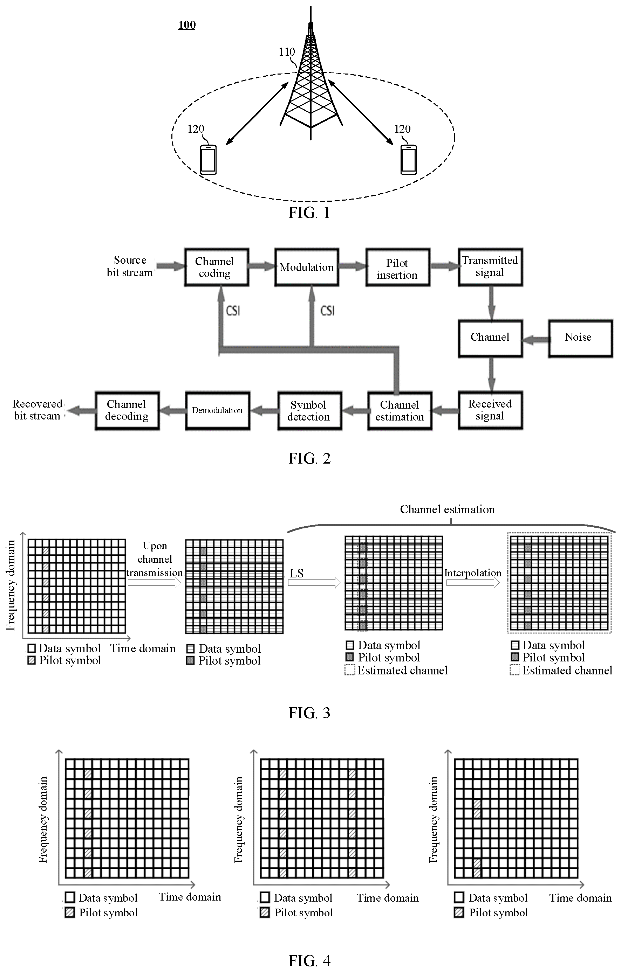

FIG. 1 illustrates a communication system 100 as an example. The communication system includes a network device 110 and two terminal devices 120. In some embodiments, the communication system 100 may include a plurality of network devices 110, and within the coverage area of each of the network devices 110, the number of terminal devices 120 is not limited in the embodiments of the present disclosure.

It should be understood that a device having the communication function in the network or system is referred to as a communication device. Taking the communication device illustrated in FIG. 1 as an example, the communication device includes a network device and a terminal device that have the communication function, and the network device and the terminal device are specific devices in the embodiments of the present disclosure, which are not elaborated herein any further. The communication device may further include other devices in the communication system, such as a network controller, a mobility management entity (MME), or other network entities, which is not limited in the embodiments of the present disclosure.

It should be understood that the terms "system" and "network" herein are interchangeably used herein. The term "and/or" herein merely indicates an association relationship describing associated objects, that is, three types of relationships. For example, the phrase "A and/or B" indicates (A), (B), or (A and B). In addition, the character "/" generally indicates an "or" relationship between the associated objects.

It should be understood that the term "indicate" in the embodiments of the present disclosure means the direct indication, indirect indication, or an associated relationship. For example, A indicating B means that A directly indicates B, for example, B is acquired by A; A indirectly indicates B, for example, A indicates C and B is acquired by C; A and B are associated.

In the description of the embodiments of the present disclosure, the term "corresponding" means that there is a direct correspondence relationship or indirect correspondence relationship between two objects, an association relationship between two objects, a relationship of indicating or being indicated, or a relationship of configuring and being configured.

For ease of understanding of the technical solutions according to the embodiments of the present disclosure, the related techniques of the embodiments of the present disclosure are described hereinafter. The related techniques hereinafter, as optional solutions, may be combined with the technical solutions according to the embodiments of the present disclosure in any way, and all combinations fall within the protection scope of the embodiments of the present disclosure.

### (1) Wireless communication system

FIG. 2 is a schematic diagram of a basic workflow in a wireless communication system. As illustrated in FIG. 2, the basic workflow in the wireless communication system generally include:
at a transmitter end, a transmitter performs channel coding and modulation on a source bitstream to obtain modulated symbols, inserts pilot symbols (i.e., reference signals) into the modulated symbols for channel estimation and symbol detection at a receiver end. Finally, a transmit signal is formed and transmitted over a channel to the receiver end.

At the receiver end, a receiver first performs channel estimation using the pilot symbols and feeds back channel state information (CSI) obtained from the channel estimation to the transmitter end via a feedback link, allowing the transmitter to adjust the schemes for channel coding, modulation, precoding, and the like. Finally, the receiver obtains a final recovered bitstream by symbol detection, demodulation, and channel decoding.

The above process is a simple illustration. Traditional communication systems further include other modules not listed herein, such as modules for resource mapping, precoding, interference cancellation, CSI measurement, and the like. These modules are typically designed and implemented individually, and then are integrated to form a complete wireless communication system.

### (II) Channel estimation and pilot resource allocation

Due to the complexity and time-variance of the wireless channel environment, in the above system, the estimation and the recovery of the receiver for the wireless channel directly affect the recovery performance of final data. FIG. 3 is a schematic diagram of a process of channel estimation and recovery in a communication system. As illustrated in FIG. 3, an entire physical resource block (PRB) contains a plurality of resource elements (REs). The transmitter allocates data symbols and specific reference signals (i.e., pilot symbols, such as a channel-state information reference signal (CSI-RS) and a demodulation reference signal (DMRS)) known to the receiver on different REs within the PRB. At the channel estimation stage, the receiver estimates channel information at an RE location where the pilot symbol is placed using least squares (LS) based on a true pilot and a received pilot transmitted over a channel. Subsequently, the receiver recovers channel information of the entire PRB using an interpolation algorithm based on the channel information at the RE location for subsequent channel information feedback or data recovery.

In the 5G NR system, data symbols and pilot symbols are placed on different REs. FIG. 4 is a schematic diagram illustrating patterns of resource allocation for data symbols and pilot symbols under different configurations. It can be seen that data symbols and pilot symbols are orthogonal in time-domain resources, frequency-domain resources, or code-division resources, that is, the same RE only accommodates either a data symbol or a pilot symbol. The RE for transmitting the pilot symbol cannot be used to transmit data, resulting in a waste of system bandwidth. Moreover, different pilot densities are required for different wireless environments. For example, in a case where the UE moves at a high speed, the channel characteristics vary rapidly over time, and thus pilot symbols need to be more densely placed in the time domain to ensure the channel estimation quality.

### (III) Neural network

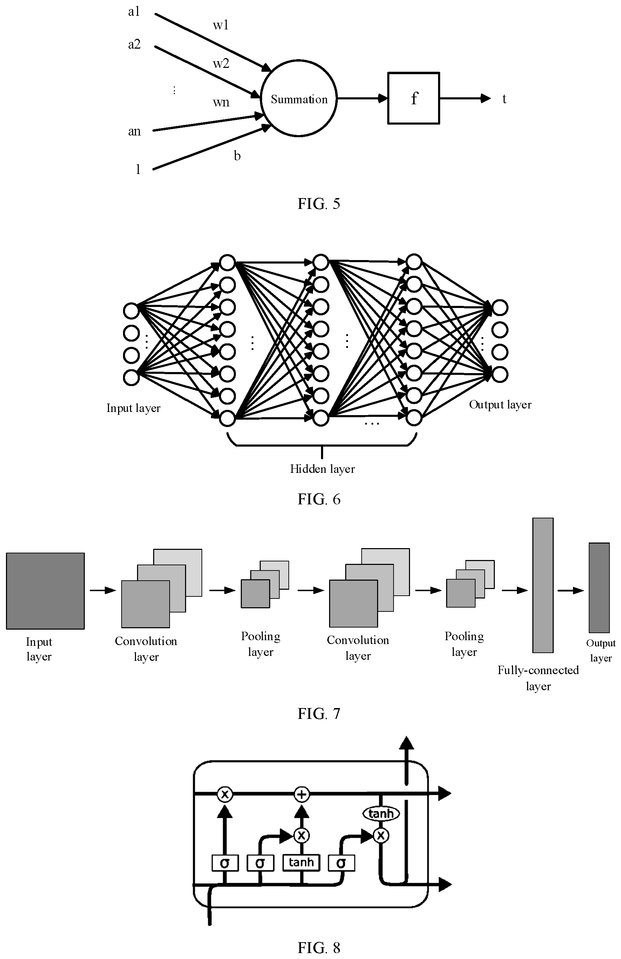

The neural network is a computational model consisting of several interconnected neuron nodes. FIG. 5 is a schematic diagram of a neuron node. Connection between one node and another node represents a weighted value from an input signal to an output signal, and the weighted value is also referred to as a weight (such as w1, w2, wn, or the like). Each node performs weighted summation on different input signals (such as a1, a2, an, and the like) (optionally, further performs summation on bias information b), and outputs a result t using a specific activation function f.

FIG. 6 is a schematic diagram of a simple fully-connected neural network. As illustrated in FIG. 6, the fully-connected neural network includes an input layer, a hidden layer, and an output layer. Based on different connection modes, weights, and activation functions of several neurons, different outputs are generated, thereby fitting a mapping relationship from the input to the output. Each upper-level node is connected to all lower-level nodes. The fully-connected model is also referred to as a deep neural network (DNN).

Next, a convolutional neural network (CNN) is introduced. FIG. 7 is a schematic diagram of a convolutional neural network. As illustrated in FIG. 7, the convolutional neural network basically includes an input layer, a plurality of convolution layers, a plurality of pooling layers, a fully-connected layer, and an output layer. Each neuron of a convolution kernel in the convolution layer is locally connected to its input, and a local maximum or average value characteristic of a layer is extracted by introducing a pooling layer, such that parameters of the network are effectively reduced, local features are extracted, and the convolutional neural network converges quickly and achieves excellent performance.

Lastly, a recurrent neural network (RNN) is introduced. The RNN is a neural network that models sequential data, and has gained remarkable achievements in natural language processing applications such as machine translation and speech recognition. Specifically, the network memorizes information from past moments, and uses the information in current output calculation. That is, nodes between hidden layers are connected rather than unconnected, and the input to the hidden layer includes output from the input layer and the output of the hidden layer at a previous moment. The LSTM network is a commonly used RNN. FIG. 8 is a schematic diagram of a basic structure of an LSTM network unit. Unlike the RNN that only considers the most recent state, a unit state of an LSTM determines which states should be retained and which should be forgotten, such that the shortcomings of the traditional RNN in long-term memory are addressed.

### (IV) AI-based channel estimation

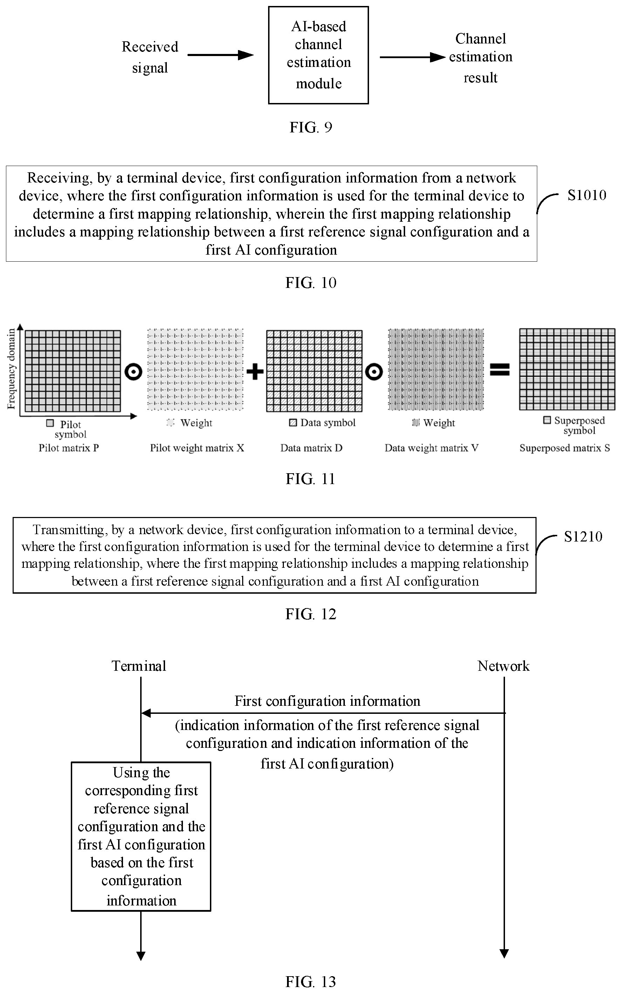

FIG. 9 is a schematic diagram of an AI-based channel estimation module. The AI-based channel estimation module is internally implemented as a neural network such as a DNN or a CNN. The input information to the module is a received signal corresponding to a pilot symbol RE and the pilot symbol, and the output information from the module is a channel estimation result of the entire PRB. It should be noted that in addition to the reference signal, other auxiliary information may be added into the input information of the AI-based channel estimation module to improve the performance of the AI-based channel estimation and recovery module. For example, the auxiliary information is the energy level, delay characteristics, and noise characteristics of a received signal or all received signals corresponding to the data symbol RE.

In practical applications, the structure of the network model inside the channel estimation module may be flexibly designed based on the structures of various neural networks in the related technology (II).

Compared to traditional receivers, the AI-based receiver solutions (such as the AI-based channel estimation solutions) exhibit performance gains in channel estimation. However, the overhead of reference signals is still not significantly reduced (such as making the overhead approach zero). In related technologies, the reference signal and the AI functionality/characteristic/model are configured or activated separately. However, different reference signal configurations may require individual trainings of different AI/machine learning (ML) models. Mismatched reference signal configurations and AI/ML models may lead to deterioration in the channel estimation performance, or even signal detection failures. For example, in a case where the terminal device performs the channel estimation on low-overhead or zero-overhead reference signals using a non-AI/ML channel estimation algorithm, the channel estimation performance may be deteriorated, or even the signal detection may fail. Alternatively, in a case where the terminal performs the channel estimation on traditional reference signals using an AI/ML channel estimation algorithm, the channel estimation performance may be deteriorated, or even the signal detection may fail.

The embodiments of the present disclosure are mainly intended to solve at least one of the above technical problems.

FIG. 10 is a schematic flowchart of a configuration method according to some embodiments of the present disclosure. The method is optionally applicable to the system illustrated in FIG. 1, but is not limited thereto. The method includes the following process.

In S1010, a terminal device receives first configuration information from a network device, wherein the first configuration information is used for the terminal device to determine a first mapping relationship, wherein the first mapping relationship includes a mapping relationship between a first reference signal configuration and a first AI configuration.

It should be understood that in the embodiments of the present disclosure, the first configuration information is used to indicate the association between the first reference signal configuration and the first AI configuration, such that the terminal device determines that a mapping relationship (or correspondence) is present between the first reference signal configuration and the first AI configuration.

Optionally, the first configuration information is further used to trigger the terminal device to use the first reference signal configuration and/or the first AI configuration.

Optionally, the first configuration information is carried by a broadcast message, radio resource control (RRC) configuration information, DCI, or a medium access control (MAC) control element (CE).

Specifically, the first configuration information is notified to the terminal device through one or more of a broadcast message (e.g., master information block (MIB), system information block (SIB)1, and SIB), an RRC message, a MAC CE, DCI, a downlink message during a random access process (e.g., message 2 (Msg2), message 4 (Msg4), a physical downlink control channel (PDCCH), a physical downlink shared channel (PDSCH), or a dedicated downlink channel for AI/ML.

In the embodiments of the present disclosure, the first reference signal configuration may be configuration information of the first reference signal, which is used to determine relevant information of the first reference signal, such as time-domain information, frequency-domain information, code-domain information, and the like.

Optionally, the first reference signal is a CSI-RS, a DMRS, a phase-tracking reference signal (PT-RS), a sounding reference signal (SRS), a synchronization signal (SS)/physical broadcast channel (PBCH) block (SSB), a positioning reference signal (PRS), and the like.

As described above, in the 5G NR, data symbols and pilot symbols (reference signal symbols) are placed on different REs. That is, data symbols and pilot symbols are orthogonal in time-domain resources, frequency-domain resources, or code-division resources, the same RE only accommodates either a data symbol or a pilot symbol, and the RE for transmitting the pilot symbol cannot be used to transmit data. In the embodiments of the present disclosure, the first reference signal may be a traditional reference signal transmitted orthogonally to data, or a reference signal transmitted non-orthogonally to data. In some descriptions, the reference signal transmitted orthogonally to data (i.e., data cannot be transmitted on the same RE) may be also referred to as an orthogonal reference signal or orthogonal pilot, and the reference signal transmitted non-orthogonally to data (i.e., data is transmittable on the same RE) may be also referred to as a non-orthogonal reference signal or non-orthogonal pilot.

To facilitate understanding of the non-orthogonal reference signal, the application methods are introduced hereinafter. it is assumed that a resource allocated by the system includes N subcarriers × M time-domain orthogonal frequency-division multiplexing (OFDM) symbols, such as including one PRB, one sub-band, a plurality of contiguous PRBs or a plurality of contiguous sub-bands. A data matrix transmitted on the resource may be represented as D∈Q^{N×M}, wherein Q represents a set of data symbols; and a pilot matrix transmitted on the resource may be represented as P∈P^{N×M}, wherein P represents a set of pilot symbols. In the embodiments of the present disclosure, the data matrix and the pilot matrix may be superimposed. That is, a superimposed matrix is determined based on the data symbol matrix and the pilot symbol matrix.

FIG. 11 is a schematic diagram of a superimposed matrix according to some embodiments of the present disclosure. As illustrated in FIG. 11, the superimposed matrix is represented as:$S = V ⊙ D + X ⊙ P$

S∈C^{N×M} represents superimposed symbols, C represents a set of complex numbers, V represents a data weight matrix and V = sqrt(A)∈[0,1]^{N×M}, X represents a pilot weight matrix and X = sqrt(1-A) ∈ [0,1]^{N×M}, A ∈ [0,1]^{N×M}, sqrt(·) represents square root calculation, and ⊙ represents a Hadamard product.

In a case where a size of the resource allocated by the system changes, equal-dimension transformation is performed on the weight matrix, the data matrix, and the pilot matrix accordingly. The non-orthogonal pilot is used at the receiver end to assist the AI receiver in jointly performing the channel estimation and the symbol detection on the received superimposed signals.

It should be noted that the pilot weight matrix X, the data weight matrix V, and the matrix A are in one-to-one correspondence. Once the matrix X is determined, the matrix V and the matrix A are also determined accordingly. The pilot weight matrix X, the data weight matrix V, and the matrix A may be represented by patterns. It should be understood that the pattern of the matrix X is in one-to-one correspondence with the pattern of the matrix V and the pattern of the matrix A.

It should be understood from the above description that the first reference signal in the embodiments of the present disclosure may include reference signals (the orthogonal reference signal) defined in the current communication systems, other orthogonal reference signals with different patterns or configurations from the reference signals defined in the current communication systems, or non-orthogonal reference signals with arbitrary patterns. The present disclosure does not impose any limitations on this.

In the embodiments of the present disclosure, the first AI configuration may be configuration information of an AI model, such as information used to determine the AI model or to determine functionalities, applicable characteristics, and the like of the AI model.

Optionally, the AI model may be implemented based on neural networks such as the DNN, the CNN, or the RNN.

Optionally, the AI model may be a model related to internal functions of the receiver, such as a channel estimation model, a symbol detection model, a joint channel estimation and symbol detection model (i.e., a model used to perform integrated processing of channel estimation and symbol detection), and the like.

Corresponding to the above method, FIG. 12 is a schematic flowchart of a configuration method according to some embodiments of the present disclosure. The method is optionally applicable to the system illustrated in FIG. 1, but is not limited thereto. The method includes the following process.

In S1210, a network device transmits first configuration information to a terminal device, wherein the first configuration information is used for the terminal device to determine a first mapping relationship, wherein the first mapping relationship includes a mapping relationship between a first reference signal configuration and a first AI configuration.

In the method, the first configuration information is transmitted from the network device to the terminal device, and the association between the first reference signal configuration and the first AI configuration is indicated. In this way, the terminal device determines the first mapping relationship between the first reference signal configuration and the first AI configuration, such that the terminal device is prevented from mismatching and using the reference signal configuration and the AI configuration, the channel estimation performance is improved, and the overhead of the reference signal is reduced by performing the receiving process based on the reference signal that matches the AI configuration. In some embodiments, the non-orthogonal reference signal configuration is supported, such that both the data symbols and the symbols of the reference signal are transmitted on the same RE. In this way, waste of the system bandwidth is avoided, and the overhead of the reference signal is significantly reduced.

In some embodiments, the first configuration information includes first indication information and second indication information. The first indication information is used to indicate the first reference signal configuration, and the second indication information is used to indicate the first AI configuration. That is, the first configuration information simultaneously includes indication information for both the first reference signal configuration and the first AI configuration.

Optionally, the first indication information directly indicates time-domain information, frequency-domain information, code-domain information, and other information contained in the first reference signal configuration, or indicates an identifier (ID) of the first reference signal configuration according to a pre-defined ID mapping rule. The ID of the reference signal configuration is obtained by sequentially numbering different reference signal configurations, or by numbering according to the pattern matrix, the pattern configuration parameter, or the corresponding transmission configurations (e.g., a pilot sequence) and other information.

Optionally, the second indication information directly indicates the model information, the model functionality information, the model characteristic information, and the like contained in the first AI configuration, or indicates an ID of the first AI configuration according to a predefined ID mapping rule. The ID of the AI configuration is obtained by sequentially numbering the AI configurations, or is a combination of serial numbers that includes various types of AI model information, such as a combination of obtained from one or more of serial numbers of model structures, serial numbers of training datasets, serial numbers of applicable system configurations (e.g., bandwidth, number of antennas, and modulation and coding scheme (MCS)), and serial numbers of applicable different channel scenarios (e.g., urban or outdoor, high-speed or low-speed scenarios, and the like).

Correspondingly, in a case where the terminal device receives the first configuration information, the terminal device determines the first reference signal configuration based on the first indication information in the first configuration information, determines the first AI configuration based on the second indication information in the first configuration information, and ascertains that a first mapping relationship is present between the first reference signal configuration and the first AI configuration.

In some embodiments, the first configuration information includes third indication information, and the third indication information is used to indicate the first mapping relationship. That is, the first configuration information includes indication information for the first mapping relationship.

In some embodiments, the third indication information includes an ID of the first mapping relationship, and the ID of the first mapping relationship is associated with the ID of the first reference signal configuration and the ID of the first AI configuration.

Optionally, mapping is performed based on a plurality of reference signal configurations and a plurality of AI configurations to obtain a plurality of sets of mapping relationships. The ID of each set of mapping relationships is associated with the ID of the reference signal configuration and the ID of the AI configuration in the set of mapping relationships. As a result, by carrying the ID of the first mapping relationship in the first configuration information through the network device, the terminal device can determine, based on the ID of the first mapping relationship, that there is a mapping relationship between the associated first reference signal configuration and first AI configuration.

Illustratively, by mapping IDs of a plurality of reference signal configurations to IDs of a plurality of AI configurations, a plurality of sets of mapping relationships in Table 1 are obtained.

**Table 1**

| ID of mapping relationship | ID of AI configuration | ID of reference signal configuration |
|---|---|---|
| 0 | 0 | 0 |
| 1 | 1 | 0 |
| 2 | 2 | 1 |
| 3 | 3 | 1 |
| 4 | 4 | 2 |
| 5 | 5 | 2 |
| ... | ... | ... |

In some embodiments, the first reference signal configuration is used to determine first information of the first reference signal. The first information includes at least one of information A to G:

### A. Time-domain information

Illustratively, the time-domain information includes distribution of the first reference signal in the time domain, or represents time-domain positions of the first reference signal on the configured time-domain resources for transmission. The time-domain information of the first reference signal may be represented by time-related parameters (e.g., a time interval, a period, and the like), patterns, and the like. Correspondingly, the first reference signal configuration may include time-related parameters, pattern configuration information, and the like.

### B. Frequency-domain information

Illustratively, the frequency-domain information includes distribution of the first reference signal in the frequency domain, or represents frequency-domain positions of the first reference signal on the configured frequency-domain resources for transmission. The frequency-domain information of the first reference signal may be represented by frequency-related parameters, patterns, and the like. Correspondingly, the first reference signal configuration may include frequency-related parameters, pattern configuration information, and the like.

### C. Code-domain information

Illustratively, the code-domain information includes coding configuration of the first reference signal, including a code rate, a code length, and the like.

### D. Spatial-domain information

Illustratively, the spatial-domain information includes a beam configuration of the first reference signal.

### E. Whether data is transmittable on the RE occupied by the first reference signal

In the embodiments of the present disclosure, the first reference signal may be an orthogonal reference signal or a non-orthogonal reference signal. Correspondingly, the first reference signal configuration may include an indication for the type of the first reference signal, that is, the first reference signal configuration is used to determine whether data is transmittable on the RE occupied by the first reference signal.

### F. Power information

The power information may include any form of information related to transmit power of the first reference signal.

Illustratively, the power information includes at least one of:

### (1) Transmit power of the first reference signal

Optionally, the first reference signal employs single transmit power across all REs in the allocated time-frequency resources, that is, power information includes the single transmit power. Correspondingly, the first reference signal configuration is used to determine the transmit power. For example, the first reference signal configuration includes a specific power value. For example, in a case where all symbols of the first reference signal are transmitted at power P1, the power information includes a single power value P1.

Optionally, the first reference signal employs different transmit power values across the REs, that is, power information includes the different transmit power values of the first reference signal across the REs. Correspondingly, the first reference signal configuration is used to determine the transmit power values of the first reference signal across the REs. For example, the first reference signal configuration includes a power allocation pattern, a matrix, a pattern configuration parameter, or the like.

For example, p1^{th} to p2^{th} symbols of the first reference signal are transmitted with power P2, p3^{th} to p4^{th} symbols are transmitted with power P3, and p5^{th} to p6^{th} symbols are transmitted with power P4. For example, for the first reference signal, p1^{th} and p2^{th} symbols are transmitted with power P5, p3^{th} and p4^{th} symbols are transmitted with power P6, and p5^{th} and p6^{th} symbols are transmitted with power P7. In this case, the first reference signal configuration includes a pattern matrix or a configuration parameter for a power allocation pattern to reflect power values of symbols of the reference signal across the REs.

### (2) Comparison information between the transmit power of the first reference signal and the transmit power of the first channel

Optionally, the first channel is a channel other than the one on which the first reference signal is transmitted. That is, the power information may include comparison information between the transmit power of the first reference signal and the transmit power of another channel.

Optionally, the comparison information refers to ratio information. Specifically, the comparison information refers to the ratio information between the transmit power of the first reference signal and the transmit power of the first channel, or the ratio information between the transmit power of the first channel and the first reference signal. In the allocated resources, the comparison information between the transmit power of the first reference signal and the transmit power of another channel on various REs may be the same or different. Correspondingly, the comparison information may include a single ratio value or a plurality of ratio values in one-to-one-correspondence with the plurality of REs. In a case where the comparison information includes the plurality of ratio values in one-to-one-correspondence with the plurality of REs, the comparison information may be represented in the form of a pattern matrix, a pattern configuration parameter, or the like.

### (3) Comparison information between the transmit power of the first reference signal and the transmit power of the first data on the channel on which the first reference signal is transmitted

Optionally, the first data refers to data transmitted on the channel on which the first reference signal is transmitted. That is, the power information may include comparison information between the transmit power of the first reference signal and the transmit power of the data on the same channel.

Optionally, the comparison information refers to ratio information. Specifically, the comparison information refers to the ratio information between the transmit power of the first reference signal and the transmit power of the first data, or the ratio information between the transmit power of the first data and the first reference signal. In the allocated resources, the comparison information between the transmit power of the first reference signal and the transmit power of the first data on various REs may be the same or different. Correspondingly, the comparison information may include a single ratio value or a plurality of ratio values in one-to-one-correspondence with the plurality of REs. In a case where the comparison information includes the plurality of ratio values in one-to-one-correspondence with the plurality of REs, the comparison information may be represented in the form of a pattern matrix, a pattern configuration parameter, or the like.

### (4) Comparison information between the transmit power of the first reference signal and the total power of the channel on which the first reference signal is transmitted

Optionally, the total power is a sum of the transmit power of the first signal and the transmit power of the first data, that is, the total power of the entire channel. In this case, the comparison information is a ratio of the transmit power of the first reference signal to the total power.

Optionally, ratios of the transmit power of the first reference signal to the transmit power of the first data on various REs in the allocated resources may be the same or different. Correspondingly, the comparison information may include a single ratio value or a plurality of ratio values in one-to-one-correspondence with the plurality of REs. In a case where the comparison information includes the plurality of ratio values in one-to-one-correspondence with the plurality of REs, the comparison information may be represented in the form of a pattern matrix, a pattern configuration parameter, or the like.

### (5) Comparison information between the transmit power and the total power of the first data

Optionally, the comparison information refers to ratio information. That is, the comparison information is a ratio of the transmit power of the first data to the total power. In the allocated resources, ratios of the transmit power values of the first reference signal to the total power on various REs may be the same or different. Correspondingly, the comparison information may include a single ratio value or a plurality of ratio values in one-to-one-correspondence with the plurality of REs. In a case where the comparison information includes the plurality of ratio values in one-to-one-correspondence with the plurality of REs, the comparison information may be represented in the form of a pattern matrix, a pattern configuration parameter, or the like.

It should be understood that the power information determined based on the first reference signal configuration may include one or more types of information from (1) to (5) mentioned above. For example, the power information only includes the transmit power of the first reference signal or the comparison information between the transmit power of the first reference signal and the total power, or simultaneously includes both the power of the first reference signal and the comparison information between the power of the first reference signal and the total power, which is set according to protocol specifications, system conventions, or application requirements in practical applications.

Optionally, the comparison information includes a ratio of energy per resource element (EPRE) and/or a scale factor of the transmit power. For example, the comparison information between the transmit power of the first reference signal and the transmit power of the first channel includes a ratio of the EPRE of the overall first channel to the EPRE of the first reference signal.

Optionally, the power information furthers include a correspondence between the transmit power of the first reference signal or the comparison information related to the transmit power of the first reference signal and a time-frequency resource. In other words, the power information includes the transmit power of the first reference signal on specific time-frequency resources or the comparison information related to the transmit power. For example, the power information includes the transmit power of the first reference signal on each resource element (RE) on the time-frequency resources allocated for transmission, that is, the power information includes a plurality of power values, and the power values are in one-to-one correspondence with the REs.

### G. Transmission configuration

Optionally, the transmission configuration of the first reference signal configuration includes a sequence type of the first reference signal and/or the number of ports corresponding to the first reference signal. The sequence type may also be referred to as a pilot sequence type.

The sequence type may be, for example, a Gold (a pseudo-random sequence) sequence, a Zadoff-chu (ZC) sequence, a m-sequence, an all-ones sequence, a specific sequence modulated by 16 quadrature phase shift keying (QPSK), 16QAM, 64QAM, and other processing, or a sequence obtained based on AI training.

It should be noted that in the embodiments of the present disclosure, the first reference signal configuration may be used to determine the first information of the first reference signal, that is, to determine one or more of the information A to G. For example, the first reference signal configuration is used to determine the time-domain information, the frequency-domain information, and the power information of the first reference signal, or to determine the time-domain information, the frequency-domain information, and the transmission configuration of the first reference signal. In practical applications, the types of information in the first information are set according to protocol specifications, system conventions, or application requirements, which are not enumerated herein.

Correspondingly, the first indication information used to indicate the first reference signal configuration may include an indication of one or more of the information A to G. Similarly, the ID of the first reference signal configuration may be an ID code generated based on one or more of the information A to G.

In some embodiments, the first reference signal configuration includes configuration information of a first pattern of the first reference signal, and the first pattern is related to the first information of the first reference signal. Specifically, the first information of the first reference signal (e.g., the time-domain information, the frequency-domain information, the power information, and the like) may be represented by the first pattern, and the first reference signal configuration is configuration information of the first pattern.

Illustratively, the first pattern includes at least one of:
a resource allocation pattern of the first reference signal; or
a power allocation pattern of the first reference signal.

The resource allocation pattern is used to represent distribution of REs occupied by the first reference signal, or to represent whether a symbol of a first reference signal is present on each allocated RE. The power allocation pattern is used to represent distribution of power of the first reference signal, or to represent the power information on each allocated RE.

It should be noted that the first reference signal may be either an orthogonal reference signal or a non-orthogonal reference signal. Correspondingly, the resource allocation pattern may be a resource allocation pattern of an orthogonal reference signal or a resource allocation pattern of a non-orthogonal reference signal, and the power allocation pattern may be a power allocation pattern of an orthogonal reference signal or a power allocation pattern of a non-orthogonal reference signal.

In some embodiments, the configuration information of the first pattern includes at least one of:

### (1) Pattern matrix of the first pattern

For the form of the pattern matrix, reference may be made to the pilot matrix P in FIG. 11. Each element (or each position) of the pattern matrix corresponds to an RE, and a value of the matrix element indicates whether a symbol of the first reference signal is present on the corresponding RE or indicates the power information of the first reference signal. For example, each element in the pattern matrix of the resource allocation pattern indicates whether a symbol of the first reference signal is present on each RE, and each element in the pattern matrix of the power allocation pattern indicates the transmit power of the first reference signal on each RE.

### (2) Pattern configuration parameter of the first pattern

The configuration parameter directly or indirectly determines the first pattern.

For example, for a DMRS of a PDSCH, the configuration parameter may include one or more of: an additional position (affecting the number of time-domain symbols occupied by the first reference signal in a PRB), a mapping type (affecting a starting symbol position where the first reference signal is placed in a slot), a configuration type (affecting a maximum consecutive length of the first reference signal in the frequency domain), and the like. Referring to Table 2, a mapping table between IDs of patterns and pattern configuration parameters is predefined in the standard specification, such that the first pattern is determined based on the pattern configuration parameters.

**Table 2**

| ID of pattern ID | Additional position | Mapping type | Configuration type |
|---|---|---|---|
| 0 | 0 | A | 1 |
| 1 | 1 | A | 1 |
| 2 | 2 | A | 1 |
| 3 | 3 | A | 1 |
| 4 | 0 | B | 1 |
| 5 | 1 | B | 1 |
| ... | ... | ... | ... |

It should be understood that in the embodiments of the present disclosure, the ID of the first reference signal configuration may also be an ID of the pattern or an ID obtained by coding based on the combination of pattern configuration parameters.

### (3) Difference information of the first pattern relative to a second pattern.

The second pattern may be a pre-defined or pre-configured pattern, for example, a pattern that already exists in the current communication system.

Illustratively, the first pattern may be a new pattern obtained by grouping or adding/deleting resources allocated to the first reference signal in the second pattern. Then, the difference information may include group information and/or resource addition/deletion information, such that the terminal device determines the first pattern based on the configuration information of the second pattern and the difference information.

For example, after a new pattern is formed by grouping or adding/deleting resources allocated to the first reference signal in an existing DMRS pattern, the new pattern is defined using a combination of the parameters of the existing DMRS pattern and group information (e.g., a group ID and/or resource addition/deletion information).

The above description provides illustration of the information content and implementation methods of the first reference signal configuration. It should be understood that the above description is applied to any type of reference signal, such as reference signals (the orthogonal reference signal) defined in the current communication systems, other orthogonal reference signals with different patterns or configurations from the reference signals defined in the current communication systems, or non-orthogonal reference signals with arbitrary patterns. The present disclosure does not impose any limitations on this. For corresponding reference signal configurations of the other orthogonal reference signals with different patterns or configurations from the reference signals defined in the current communication systems or the non-orthogonal reference signals with arbitrary patterns, reference may be made to the pattern matrix and pattern configuration parameters of the defined reference signals.

The first AI configuration in the embodiments of the present disclosure is illustrated hereinafter.

In some embodiments, the first AI configuration may include at least one of:

### (1) Configuration information of functionality of an AI model

Illustratively, the configuration information of the functionality of the AI model is used to determine the functionality of the AI model that matches the first reference signal. The functionality of the AI model includes, for example, channel estimation, symbol detection, joint channel estimation and symbol detection, and the like.

### (2) Configuration information of applicable characteristics of the AI model

Illustratively, the configuration information of the applicable characteristics of the AI model is used to determine the applicable characteristics (or applicable conditions) of the AI model that match the first reference signal.

For example, the applicable characteristics of the AI model include an applicable system configuration such as the bandwidth, the number of antennas, the MCS, or includes an applicable channel scenario such as the urban or outdoor, the high-speed or low-speed scenarios, and the like.

### (3) Configuration information of an AI model

Illustratively, the configuration information of the AI model is used to determine the AI model that matches the first reference signal.

Optionally, the configuration information of the AI model includes a training parameter. In practical applications, the AI model is uniquely determined by training based on the training parameter. The optional method is applicable to a scenario where temporary model training is performed before each model deployment.

In some embodiments, the training parameter of the AI model includes at least one of: a model structure, a model initialization parameter, an optimizer, a learning rate, the number of training iterations (i.e., total training rounds), or a training dataset.

In the embodiments of the present disclosure, the network device transmits the first configuration information to the terminal device, and the association between the first reference signal configuration and the first AI configuration is indicated. In this way, the terminal device determines the first mapping relationship between the first reference signal configuration and the first AI configuration. Furthermore, in some embodiments, the terminal device uses the first reference signal configuration and the first AI configuration based on the first mapping relationship.

Specifically, in some embodiments, the configuration method further includes: associatively using, by the terminal device, the first reference signal configuration and the first AI configuration. Herein, the term "associatively using" may be understood as "simultaneous using".

Implementation schemes for associatively using the first reference signal configuration and the first AI configuration are provided hereinafter.

Scheme 1: Associatively using, by the terminal device, the first reference signal configuration and the first AI configuration includes: using, by the terminal device, the first reference signal configuration and the first AI configuration upon receiving the first configuration information.

That is, the first configuration information is used for the terminal device to determine the first mapping relationship between the first reference signal configuration and the first AI configuration, and is further used to trigger the terminal device to use the first reference signal configuration and the first AI configuration.

FIG. 13 is a schematic diagram of an application example. As illustrated in FIG. 13, the first configuration information includes indication information (first indication information) of the first reference signal configuration and indication information (second indication information) of the first AI configuration. In a case where the terminal device receives the first configuration information, the terminal device determines the first reference signal configuration and the first AI configuration, and simultaneously uses both the first reference signal configuration and the first AI configuration.

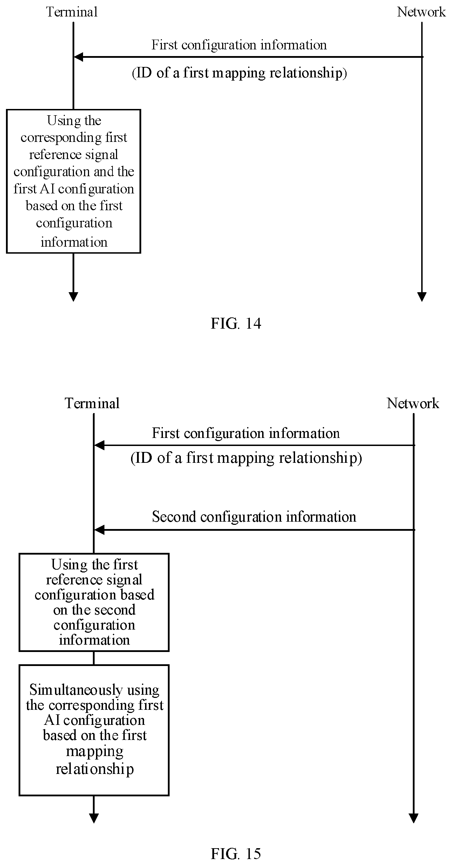

FIG. 14 is a schematic diagram of an application example. As illustrated in FIG. 14, the first configuration information includes third indication information to indicate the ID of the first mapping relationship. In a case where the terminal device receives the first configuration information, the terminal device determines the first reference signal configuration and the first AI configuration, and simultaneously uses both the first reference signal configuration and the first AI configuration. The first reference signal configuration and the first AI configuration may be pre-configured or determined based on other configuration information.

Scheme 2: Associatively using, by the terminal device, the first reference signal configuration and the first AI configuration includes: using, by the terminal device, the first AI configuration based on the first mapping relationship in a case where the first reference signal configuration is used.

That is, the first configuration information is used for the terminal device to determine the first mapping relationship between the first reference signal configuration and the first AI configuration, such that the terminal device uses the associated first AI configuration simultaneously when using the first reference signal configuration.

Optionally, the first reference signal configuration is triggered for use based on the second configuration information. Specifically, the configuration method may further include: transmitting, by the network device, second configuration information to the terminal device, wherein the second configuration information is used to indicate the first reference signal configuration to trigger the terminal device to use the first reference signal configuration and use the first AI configuration based on the first mapping relationship.

Correspondingly, using, by the terminal device, the first AI configuration based on the first mapping relationship in a case where the first reference signal configuration is used includes: receiving, by the terminal device, second configuration information used to indicate the first reference signal configuration, using the first reference signal configuration based on the second configuration information, and using the first AI configuration based on the first mapping relationship.

Optionally, the second configuration information includes the ID of the first reference signal configuration, or includes the first reference signal configuration, such as transmission configuration (a sequence, the number of ports, and the like), configuration information of the first pattern (a pattern matrix, a pattern configuration parameter, difference information relative to the second pattern, and the like), or the ID of the first pattern. The ID may be an ID code generated based on the pattern configuration parameter or a combination of parameters. For specific implementations, reference may be made to the corresponding descriptions in the above embodiments, which are not elaborated herein any further.

FIG. 15 is a schematic diagram of an application example. As illustrated in FIG. 15, the network device enables the terminal device to determine the first mapping relationship by issuing the first configuration information. Specifically, the network device may carry third indication information in the first configuration information to indicate the first mapping relationship. For example, the network device carries the ID of the first mapping relationship. The network device issues the second configuration information to trigger the terminal device to use the first reference signal configuration based on the second configuration information, and to simultaneously use the corresponding first AI configuration based on the first mapping relationship.

Scheme 3: Associatively using, by the terminal device, the first reference signal configuration and the first AI configuration includes: using, by the terminal device, the first reference signal configuration based on the first mapping relationship in a case where the first AI configuration is used.

That is, the first configuration information is used for the terminal device to determine the first mapping relationship between the first reference signal configuration and the first AI configuration, such that the terminal device uses the associated first reference signal configuration simultaneously in a case where the first AI configuration is used.

Optionally, the first AI configuration is triggered based on the third configuration information for use. Specifically, the configuration method may further include: transmitting, by the network device, third configuration information to the terminal device, wherein the third configuration information is used to indicate the first AI configuration to trigger the terminal device to use the first AI configuration and use the first reference signal configuration based on the first mapping relationship.

Correspondingly, using, by the terminal device, the first reference signal configuration based on the first mapping relationship in a case where the first AI configuration is used includes: receiving, by the terminal device, third configuration information used to indicate the first AI configuration, uses the first AI configuration based on the third configuration information, and uses the first reference signal configuration based on the first mapping relationship.

Optionally, the third configuration information includes the ID of the first AI configuration, or includes the first AI configuration. For a numbering method of the ID of the first AI configuration and the information content contained in the first AI configuration, reference may be made to the corresponding descriptions in the above embodiments, which are not elaborated herein any further.

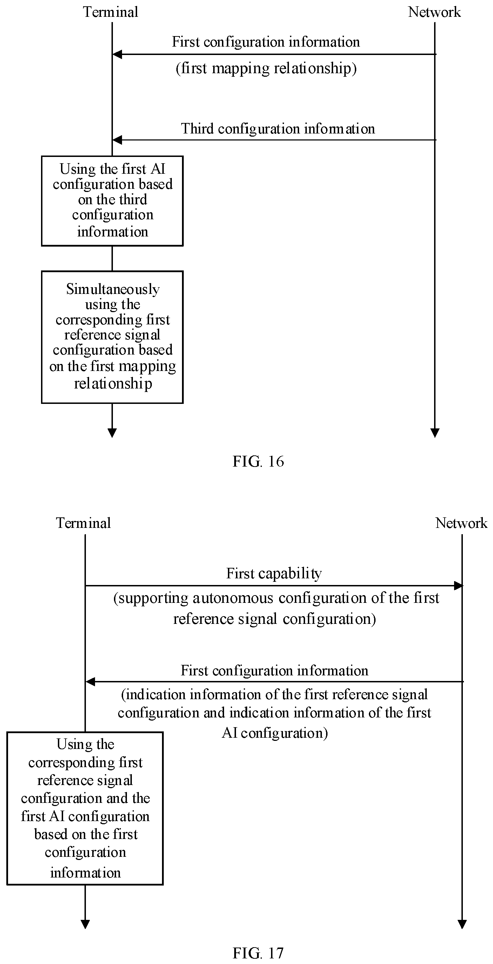

FIG. 16 is a schematic diagram of an application example. As illustrated in FIG. 16, the network device enables the terminal device to determine the first mapping relationship by issuing the first configuration information. Specifically, the network device can carry third indication information in the first configuration information to indicate the first mapping relationship. For example, the network device carries the ID of the first mapping relationship. The network device issues the third configuration information to trigger the terminal device to use the first AI configuration based on the third configuration information, and to simultaneously use the corresponding first reference signal configuration based on the first mapping relationship.

Based on any of the above embodiments, the configuration method may further include a process of reporting a capability of the terminal device. Specifically, in some embodiments, the configuration method further includes: transmitting, by the terminal device, first reporting information to the network device, wherein the first reporting information is used to report a first capability of the terminal device, wherein the first capability is related to the first reference signal configuration and/or the first AI configuration.

Correspondingly, on the network side, the configuration method may further include: receiving, by the network device, first reporting information from the terminal device, wherein the first reporting information is used to report the first capability of the terminal device, wherein the first capability is related to the first reference signal configuration and/or the first AI configuration.

Through reporting of the capability of the terminal device, the network device determines the capability of the terminal device related to the first reference signal configuration and/or the first AI configuration, and thus is assisted in deciding issuance of the first configuration information.

For the first capability, there are several optional settings as follows.

Scheme A: The first capability includes support for autonomous configuration of the first reference signal configuration by the terminal device.

Optionally, the first capability includes support for autonomous configuration (self-configuration) of the pattern of the orthogonal first reference signal by the terminal device, such as autonomous configuration of the pattern matrix, autonomous configuration of the pattern configuration parameter, and the like.

Optionally, the first capability includes support for autonomous configuration of a first reference signal by the terminal device, wherein the first reference signal differs from the patterns defined in the current communication system and is orthogonally transmitted with data. For example, a new pattern is obtained by grouping or adding/deleting resources allocated to the reference signal in the second pattern defined in the current communication system, and the new pattern is defined based on the second pattern and difference information of the second pattern relative to the new pattern.

Optionally, the first capability includes support for autonomous configuration of a pattern of a non-orthogonal first reference signal by the terminal device. Optionally, the pattern includes a resource allocation pattern used to determine the REs where data symbols are placed, and/or the REs where symbols of the reference signal are placed, and/or the REs where both data symbols and symbols of reference signal are placed (i.e., where superimposed symbols are placed). The pattern may also include a power allocation pattern used to determine the power of the first reference signal on the REs where the superimposed symbols are placed, or the allocation ratio of the power of the first reference signal to the power of the data.

For example, the terminal device autonomously configures that the power values allocated to the first reference signal on all REs where superimposed symbols are placed are the same, or that the allocation ratio of the power of the first reference signal to the power of the data is fixed. The terminal device may also autonomously configure that different power values are used for different REs to transmit the first reference signal. The terminal device may also autonomously configure a power allocation result of the first reference signal obtained based on AI training.

Optionally, the first capability includes support for autonomous configuration of a transmission configuration of the first reference signal by the terminal device, such as the pilot sequence or the number of ports.

Optionally, in method A, in a case where the terminal device has the first capability, the terminal device supports the first AI configuration. In this way, the terminal device associatively uses the autonomously configured first reference signal configuration and the first AI configuration.

FIG. 17 is a schematic diagram of an application example. As illustrated in FIG. 17, the terminal device first reports the first capability to the network device, and the first capability supports autonomous configuration of the first reference signal configuration. Subsequently, the network device transmits the first configuration information to the terminal device, and the first configuration information is used for the terminal device to determine the first mapping relationship between the autonomously configured first reference signal configuration and the first AI configuration. Upon receiving the first configuration information, the terminal device uses the first reference signal configuration and the first AI configuration.

Scheme B: The first capability includes support for configuration of the first reference signal configuration by the terminal device
Optionally, the first capability may include support for configuration of the pattern of the orthogonal first reference signal by the terminal device, such as autonomous configuration the pattern matrix, autonomous configuration of the pattern configuration parameter, and the like.

Optionally, the first capability includes support for configuration of a pattern of a first reference signal by the terminal device, wherein the first reference signal differs from the patterns defined in the current communication system and is orthogonal. For example, a new pattern is obtained by grouping or adding/deleting resources allocated to the reference signal in the second pattern defined in the current communication system, and the new pattern is defined based on the second pattern and difference information of the second pattern relative to the new pattern.

Optionally, the first capability includes support for configuration of a pattern of a non-orthogonal first reference signal by the terminal device. Optionally, the pattern includes a resource allocation pattern used to determine the REs where data symbols are placed, and/or the REs where symbols of the reference signal are placed, and/or the REs where both data symbols and symbols of the reference signal are placed (i.e., where superimposed symbols are placed). The pattern may also include a power allocation pattern used to determine the power of the first reference signal on the REs where the superimposed symbols are placed, or the allocation ratio of the power of the first reference signal to the power of the data.

Optionally, the first capability includes support for configuration of a transmission configuration of the first reference signal by the terminal device, such as the pilot sequence or the number of ports.

Optionally, in method B, in a case where the terminal device has the first capability, the terminal device supports the first AI configuration. In this way, the terminal device associatively uses the first reference signal configuration configured by the network device and the first AI configuration.

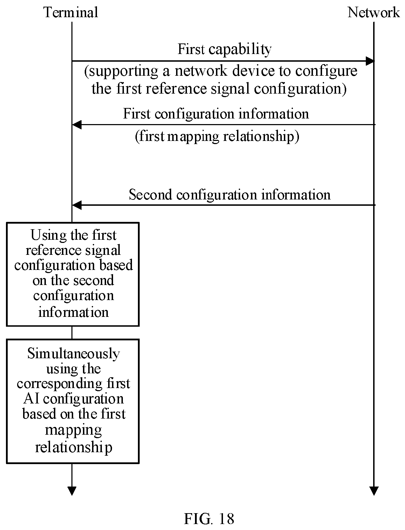

FIG. 18 is a schematic diagram of an application example. As illustrated in FIG. 18, the terminal device first reports the first capability to the network device, and the first capability supports the network device to configure the first reference signal configuration. Subsequently, the network device transmits the first configuration information to the terminal device, and the first configuration information is used to indicate the first mapping relationship. Specifically, the ID of the first mapping relationship is used to indicate the first mapping relationship between the first reference signal configuration and the first AI configuration. The network device further transmits the second configuration information to the terminal device to indicate or configure the first reference signal configuration. The terminal device uses the first reference signal configuration based on the second configuration information and uses the first AI configuration based on the first mapping relationship.

Scheme C: The first capability includes support for the first AI configuration by the terminal device.

Optionally, the first capability includes support for configuration of the configuration information of the functionality of the AI model by the terminal device, such as support for configuration of the functionality of the AI model as channel estimation, symbol detection, joint channel estimation and symbol detection, and the like.

Optionally, the first capability includes support for configuration of different AI model application characteristics by the terminal device, such as support for configuration of characteristics applicable to different system configurations (e.g., the bandwidth, the number of antennas, the MCS), and support for configuration of characteristics applicable to different channel scenarios (e.g., the urban or outdoor, the high-speed or low-speed scenarios, and the like).

Optionally, the first capability includes support for configuration of the configuration information of the AI model by the terminal device, such as support for configuration of training parameters of the AI model.

Optionally, in the method C, the terminal device supports the first reference signal configuration in a case where the terminal device has the first capability.

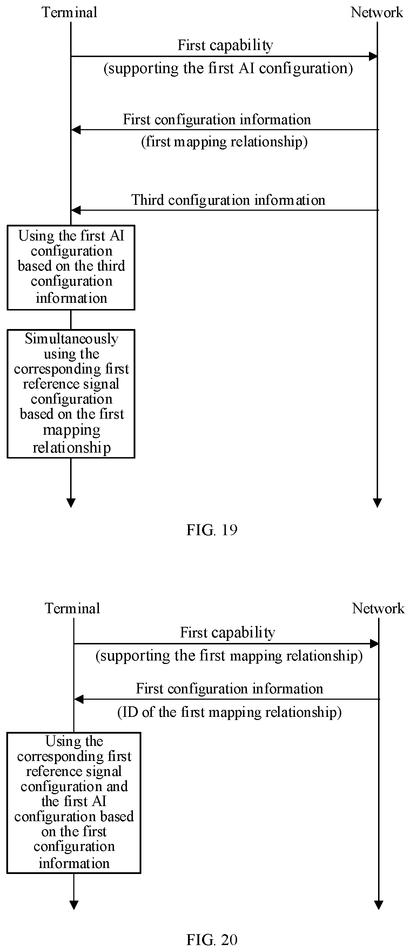

FIG. 19 is a schematic diagram of an application example. As illustrated in FIG. 19, the terminal device first reports the first capability to the network device, and the first capability supports the first AI configuration. Subsequently, the network device transmits the first configuration information to the terminal device, and the first configuration information is used to indicate the first mapping relationship. Specifically, the ID of the first mapping relationship is used to indicate the first mapping relationship between the first reference signal configuration and the first AI configuration. The network device further transmits the third configuration information to the terminal device to indicate or configure the first AI configuration. The terminal device uses the first AI configuration based on the third configuration information and uses the first reference signal configuration based on the first mapping relationship.

Scheme D: The first capability includes support for a first mapping relationship by the terminal device, that is, support for the association between the first reference signal and the first AI configuration, such as associated configuration and/or associated usage.

Optionally, in the above method D, the terminal device supports the first reference signal configuration and the first AI configuration in a case where the terminal device has the first capability.

FIG. 20 is a schematic diagram of an application example. As illustrated in FIG. 20, the terminal device first reports the first capability to the network device, and the first capability supports the first mapping relationship. Subsequently, the network device transmits the first configuration information to the terminal device, and the first configuration information is used to indicate the first mapping relationship. Specifically, the first mapping relationship between the first reference signal configuration and the first AI configuration is indicated by the ID of the first mapping relationship. The terminal device uses the first reference signal configuration and the first AI configuration that are associated in the first mapping relationship based on the first configuration information.

The embodiments of the present disclosure may further include a switching/fallback solution for the reference signal configuration and/or the AI configuration.

In some embodiments, the configuration method further includes: switching, by the terminal device, to use a second reference signal configuration and/or a second AI configuration in a case where a duration of using the first reference signal configuration and the first AI configuration reaches a first duration.

It should be understood that in the above embodiments, the terminal device follows a time structure to switch/fall back to use another reference signal configuration or AI configuration. The time structure is used to control whether to switch/fall back to another reference signal configuration or AI configuration. Specifically, in a case where the duration of the first reference signal configuration and the first AI configuration has reached a predetermined first duration, the terminal device switches/falls back to another reference signal configuration and/or AI configuration.

Illustratively, whether the first duration has been reached is determined by a timer (also referred to as a countdown timer). Switching, by the terminal device, to use the second reference signal configuration and/or the second AI configuration in a case where the duration of using the first reference signal configuration and the first AI configuration reaches the first duration includes: starting, by the terminal device, a first timer in a case where the terminal device starts to use the first reference signal configuration and the first AI configuration, wherein a timing duration of the first timer is the first duration; and switching, by the terminal device, to use the second reference signal configuration and/or the second AI configuration in response to expiration of the first timer.

Illustratively, a time unit of the first duration is a slot, a micro-slot, a symbol, a millisecond, and the like. For example, in a case where the timer reaches a duration of N slots, N symbols, or N milliseconds, it is determined that it is time to switch to use the second reference signal configuration and/or the second AI configuration.

In some embodiments, the second reference signal configuration is a reference signal configuration corresponding to a predetermined channel estimation algorithm, or a default reference signal configuration.

Illustratively, the predetermined channel estimation algorithm is a traditional channel estimation algorithm. For example, channel estimation is performed using an RS and an interpolation algorithm. In a case where the duration of the first reference signal configuration and the first AI configuration has reached the first duration, the terminal device falls back to use the traditional channel estimation algorithm.

Illustratively, the default reference signal configuration is configuration information of the second reference signal, which may be a reference signal configuration corresponding to the default AI configuration (such as the second AI configuration) or a reference signal configuration corresponding to a predetermined pattern.

In some embodiments, the second reference signal corresponding to the default reference signal configuration includes both the symbol of the orthogonal reference signal and the symbol of the non-orthogonal reference signal. On the REs occupied by the symbols of the orthogonal reference signal, only symbols of the reference signal or data symbols are transmitted; and on the REs occupied by the symbols of the non-orthogonal reference signal, both symbols of the reference signal and data symbols are transmitted simultaneously.

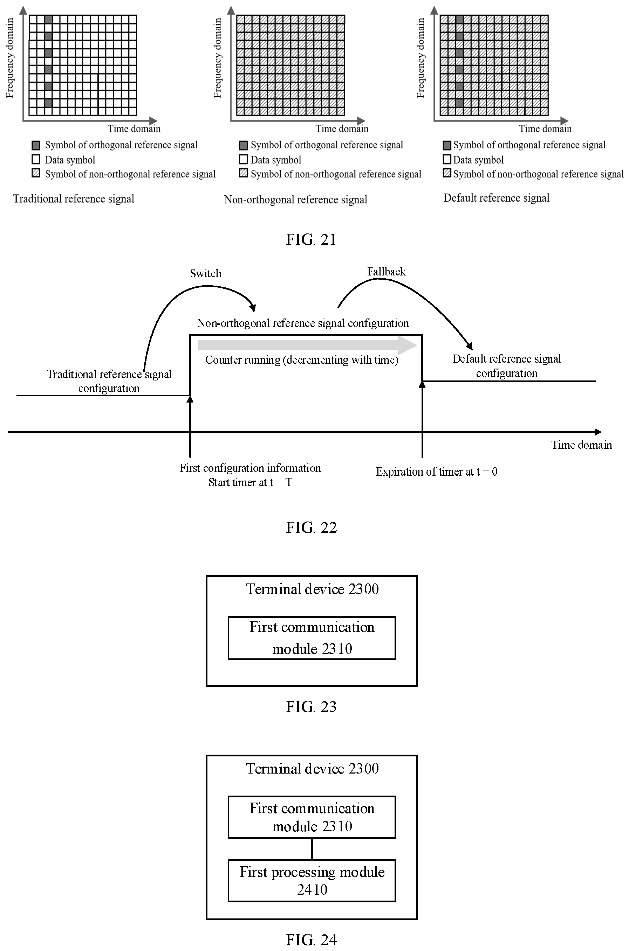

FIG. 21 is a schematic diagram of comparison of a traditional reference signal, a non-orthogonal reference signal, and a default reference signal (second reference signals). As illustrated in FIG. 21, the traditional reference signal includes symbols of the orthogonal reference signal (located on different REs from data symbols), the non-orthogonal reference signal includes symbols of the non-orthogonal reference signal, and the default reference signal includes both symbols of the orthogonal reference signal and symbols of the non-orthogonal reference signal. In some descriptions, the default reference signal may be regarded as a specific-type non-orthogonal reference signal.

It should be noted that in FIG. 21, compared to the traditional reference signal, symbols of the orthogonal reference signal in the default reference signal occupy the same resources, and the default reference signal still incurs the power overhead from symbols of the non-orthogonal reference signal on other REs, such that the overhead of the default reference signal is greater. However, an AI receiver achieves the channel estimation gain with the power overhead much lower than the system noise. Even with weak interference from the non-orthogonal reference signal on the data, high-precision channel estimation significantly improves the overall performance. Additionally, since the default reference signal contains a number of the orthogonal reference signals, the orthogonal reference signals serve as a baseline for the channel estimation performance, and then the non-orthogonal reference signal is utilized to further improve the performance. This represents a compromise between reliability and high performance between the traditional reference signal and the non-orthogonal reference signal.

FIG. 22 is a schematic diagram of an application example. As illustrated in FIG. 22, after receiving the first configuration information, the terminal starts to use the first reference signal configuration and the first AI configuration, and controls, based on the time structure (e.g., whether the timer has expired), whether to switch to the corresponding first reference signal configuration or to fall back to the second reference signal configuration, such as the traditional reference signal configuration or default reference signal configuration. In the application example in FIG. 22, the configuration is switched from the traditional reference signal configuration to the first reference signal configuration (the non-orthogonal reference signal configuration) and the corresponding AI configuration based on the first configuration information, and is further fell back to the default reference signal configuration and the corresponding AI configuration based on the timer.

In some embodiments, the configuration method further includes: monitoring, by the terminal device, whether a first condition is satisfied in a case where the first reference signal configuration and the first AI configuration are used; and switching, by the terminal device, to use a third reference signal configuration and/or a third AI configuration in a case where the first condition is satisfied.

Different from above embodiments where switching of the configuration is controlled by the time structure, in the embodiments of the present disclosure, whether to switch to use other reference signal configurations and/or AI configurations is determined by monitoring whether the first condition is satisfied.

Illustratively, the third reference signal configuration and/or the third AI configuration are associated with the first condition.

In some embodiments, the first condition is associated with a second mapping relationship, and the second mapping relationship includes a mapping relationship between a third reference signal configuration and a third AI configuration.

Specifically, a plurality of conditions may be set. In the case where one of the conditions is satisfied, the configuration is switched to the reference signal configuration and/or AI configuration that correspond to the condition for use.

Optionally, the condition is related to auxiliary information, and the auxiliary information includes system configuration information, environmental information, a system performance, and the like. Specifically, the first condition includes that the first system configuration information is detected, the first environmental information is monitored, the system performance indicator is greater than a first threshold, or the like.

Illustratively, the system configuration information includes a quasi-colocation (QCL) type, a rate matching mode, an MCS, and the like.

For example, the condition is related to the QCL type, and different conditions correspond to different mapping relationship IDs. For example, the first condition is that the QCL is Type A, Type B, or the like. Details are listed in Table 3.

**Table 3**

| Mapping relationship ID | QCL |
|---|---|
| 0 | Type A |
| 1 | Type B |
| 2 | Type C |
| 3 | Type D |
| ... | ... |

For another example, the condition is related to the MCS (corresponding to a modulation order), and different conditions correspond to different mapping relationship IDs. For example, the first condition is that the MCS Index is 0, 1, or 2. Details are listed in Table 4.

**Table 4**

| MCS index | Modulation order | Target coding rate (R×[1024]) | Spectral efficiency | ID of mapping relationship |
|---|---|---|---|---|
| 0 | 2 | 120 | 0.2344 | 0 |
| 1 | 2 | 193 | 0.3770 | 1 |
| 2 | 2 | 449 | 0.8770 | 2 |
| 3 | 4 | 378 | 1.4766 | 3 |
| 4 | 4 | 490 | 1.9141 | 4 |
| 5 | 4 | 616 | 2.4063 | 5 |
| 6 | 6 | 466 | 2.7305 | 6 |
| 7 | 6 | 517 | 3.0293 | 7 |
| ... | ... | ... | ... | ... |

Illustratively, the environmental information includes one or a combination of various factors such as a cell size (e.g., a macro cell and a picocell), an indoor/outdoor scenario, a terminal movement speed (e.g., a low speed, a medium speed, high speed, an ultra-high speed, and the like), and channel characteristics (e.g., a line-of-sight (LOS) channel, a non-line-of-sight (NLOS) channel, multipath characteristics, and frequency-selective characteristics). Once the environmental detection result of the terminal device triggers a corresponding condition, such as entering a certain cell or being at a certain speed, the terminal device triggers a corresponding matching action.

For example, the condition is related to the movement speed of the terminal. For example, the first condition is that the movement speed of the terminal is between 0 and 3 kilometers per hour (km/h). Details are listed in Table 5.

**Table 5**

| ID of mapping relationship | Movement speed of terminal |
|---|---|
| 0 | 0-3 km/h |
| 1 | 3-30 km/h |
| 2 | 30-300 km/h |
| 3 | 300-500 km/h |
| ... | ... |

For another example, the condition is related to indoor and outdoor environments. For example, the first condition is that the terminal device is deployed in an indoor or outdoor environment. Details are listed in Table 6.

**Table 6**

| ID of mapping relationship | Indoor/outdoor |
|---|---|
| 0-7 | indoor |
| 7-15 | outdoor |

Illustratively, the system performance includes a channel estimation mean squared error (MSE) metric performance, a symbol detection BLER or BER performance, and the like. For example, the first condition is that the channel estimation MSE metric is higher than a threshold m, or the BLER or BER is higher than a threshold s, or the like.

Based on the descriptions in the above embodiments, it should be understood that in the embodiments of the present disclosure, the overhead of the reference signal is significantly reduced by performing the receiving process based on the reference signal that matches the AI configuration, and even the zero overhead of the reference signal is achieved. Furthermore, in the actual application of the reference signal, the matching of the reference signal configuration and the AI configuration is supported between the network and the terminal to ensure effective reception.

FIG. 23 is a schematic block diagram of a terminal device 2300 according to some embodiments of the present disclosure. The terminal device 2300 include:
a first communication module 2310, configured to receive first configuration information from a network device, wherein the first configuration information is used for the terminal device to determine a first mapping relationship, wherein the first mapping relationship includes a mapping relationship between a first reference signal configuration and a first AI configuration.

In some embodiments, the first configuration information includes first indication information and second indication information, wherein the first indication information is used to indicate the first reference signal configuration, and the second indication information is used to indicate the first AI configuration.

In some embodiments, the first configuration information includes third indication information, wherein the third indication information is used to indicate the first mapping relationship.

In some embodiments, the third indication information includes an ID of the first mapping relationship, wherein the ID of the first mapping relationship is associated with an ID of the first reference signal configuration and an ID of the first AI configuration.

In some embodiments, the first reference signal configuration is used to determine first information of the first reference signal, wherein the first information includes at least one of :
time-domain information;
frequency-domain information;
code-domain information;
spatial-domain information;
power information;
whether data is transmittable on an RE occupied by the first reference signal; or
a transmission configuration.

In some embodiments, the power information includes at least one of :
transmit power of the first reference signal;
comparison information between transmit power of the first reference signal and transmit power of a first channel;
comparison information between transmit power of the first reference signal and transmit power of first data on a channel on which the first reference signal is transmitted;
comparison information between transmit power of the first reference signal and total power on a channel on which the first reference signal is transmitted; or
comparison information between transmit power of first data and total power.

In some embodiments, the comparison information includes a ratio of EPRE and/or a scale factor of the transmit power.

In some embodiments, the power information further includes a correspondence between transmit power of the first reference signal or comparison information related to transmit power of the first reference signal and a time-frequency resource.

In some embodiments, the first reference signal configuration includes configuration information of a first pattern of the first reference signal, wherein the first pattern is related to the first information of the first reference signal.

In some embodiments, the first pattern includes at least one of:
a resource allocation pattern of the first reference signal; or
a power allocation pattern of the first reference signal.

In some embodiments, the configuration information of the first pattern includes at least one of:
a pattern matrix of the first pattern;
a pattern configuration parameter of the first pattern; or
difference information of the first pattern relative to a second pattern.

In some embodiments, the transmission configuration includes at least one of:
a sequence type of the first reference signal; or
the number of ports corresponding to the first reference signal.

In some embodiments, the first AI configuration includes at least one of:
configuration information of functionality of an AI model;
configuration information of applicable characteristics of an AI model; or
configuration information of an AI model.

In some embodiments, the configuration information of the AI model includes a training parameter of the AI model.

In some embodiments, the training parameter of the AI model includes at least one of a model structure, a model initialization parameter, an optimizer, a learning rate, the number of training iterations, or a training dataset.

In some embodiments, as illustrated in FIG. 24, the terminal device 2300 further includes a first processing module 2410 configured to:
associatively use the first reference signal configuration and the first AI configuration.

In some embodiments, the first processing module 2410 is further configured to:
use the first reference signal configuration and the first AI configuration in a case where the first configuration information has been received.

In some embodiments, the first processing module 2410 is further configured to:
use the first AI configuration based on the first mapping relationship in a case where the first reference signal configuration is used.

In some embodiments, the first communication module 2310 is further configured to receive second configuration information, wherein the second configuration information is used to indicate the first reference signal configuration; and
the first processing module 2410 is further configured to use the first reference signal configuration based on the second configuration information, and use the first AI configuration based on the first mapping relationship.

In some embodiments, the first processing module 2410 is further configured to:
use the first reference signal configuration based on the first mapping relationship in a case where the first AI configuration is used.

In some embodiments, the first communication module 2310 is further configured to receive third configuration information, wherein the third configuration information is used to indicate the first AI configuration; and
the first processing module 2410 is further configured to use the first AI configuration based on the third configuration information, and use the first reference signal configuration based on the first mapping relationship.

In some embodiments, the first communication module 2310 is further configured to:
transmit first reporting information to a network device, wherein the first reporting information is used to report a first capability of the terminal device, wherein the first capability is related to the first reference signal configuration and/or the first AI configuration.

In some embodiments, the first capability includes support for autonomous configuration of the first reference signal configuration.

In some embodiments, the first capability includes support for configuration of the first reference signal configuration by the network device.

In some embodiments, the terminal device supports the first AI configuration in a case where the terminal device has the first capability.

In some embodiments, the first capability includes support for the first AI configuration.

In some embodiments, the first processing module 2410 is further configured to support the first reference signal configuration in a case where the terminal device has the first capability.

In some embodiments, the first capability includes support for the first mapping relationship.

In some embodiments, the terminal device supports the first reference signal configuration and the first AI configuration in a case where the terminal device has the first capability.

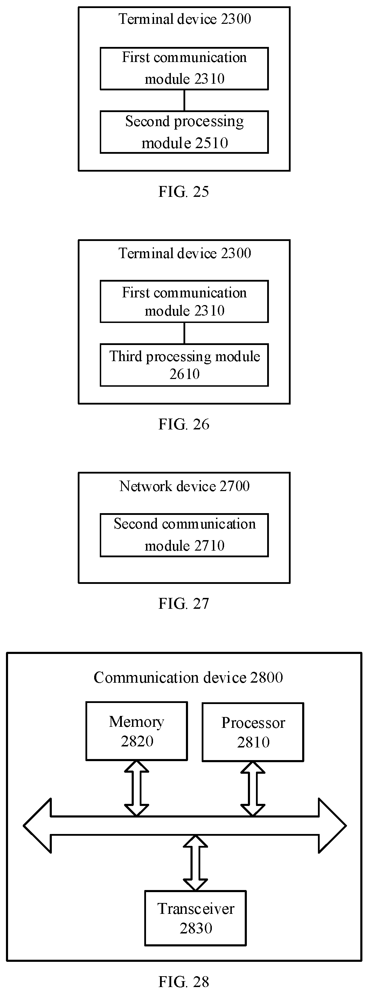

In some embodiments, as illustrated in FIG. 25, the terminal device 2300 further includes a second processing module 2510 configured to:
switch to use a second reference signal configuration and/or a second AI configuration in a case where a duration of using the first reference signal configuration and the first AI configuration reaches a first duration.

In some embodiments, the second processing module 2510 is further configured to:
start a first timer in a case where the terminal device starts to use the first reference signal configuration and the first AI configuration, wherein a timing duration of the first timer is the first duration; and
switch to use the second reference signal configuration and/or the second AI configuration in response to expiration of the first timer.

In some embodiments, the second reference signal configuration is a reference signal configuration corresponding to a predetermined channel estimation algorithm or a default reference signal configuration.

In some embodiments, a second reference signal corresponding to the default reference signal configuration includes symbols of an orthogonal reference signal and symbols of a non-orthogonal reference signal.

In some embodiments, as illustrated in FIG. 26, the terminal device further includes a third processing module 2610, configured to:
monitor whether a first condition is satisfied in a case where the first reference signal configuration and the first AI configuration are used; and
switch to use a third reference signal configuration and/or a third AI configuration in a case where the first condition is satisfied.

In some embodiments, the first condition is associated with a second mapping relationship, wherein the second mapping relationship includes a mapping relationship between the third reference signal configuration and the third AI configuration.

The terminal device 2300 in the embodiments of the present disclosure may implement the corresponding functions of the terminal device in the method embodiments. For the processes, functions, implementation methods, and beneficial effects corresponding to various modules (sub-modules, units, or assemblies) in the terminal device 2300, reference may be made to the corresponding descriptions in the method embodiments, which are not elaborated herein any further. It should be noted that the functions described for various modules (sub-modules, units, or assemblies) in the terminal device 2300 in the embodiments of the present disclosure may be implemented by different modules (sub-modules, units, or assemblies) or by the same module (sub-module, unit, or assembly).

FIG. 27 is a schematic block diagram of a network device 2700 according to some embodiments of the present disclosure. The network device 2700 includes:
a second communication module 2710, configured to transmit first configuration information to a terminal device, wherein the first configuration information is used for the terminal device to determine a first mapping relationship, wherein the first mapping relationship includes a mapping relationship between a first reference signal configuration and a first AI configuration.

In some embodiments, the first configuration information includes first indication information and second indication information, wherein the first indication information is used to indicate the first reference signal configuration, and the second indication information is used to indicate the first AI configuration.

In some embodiments, the first configuration information includes third indication information, wherein the third indication information is used to indicate the first mapping relationship.

In some embodiments, the third indication information includes an ID of the first mapping relationship, wherein the ID of the first mapping relationship is associated with an ID of the first reference signal configuration and an ID of the first AI configuration.

In some embodiments, the first reference signal configuration is used to determine first information of the first reference signal, wherein the first information includes at least one of:
time-domain information;
frequency-domain information;
code-domain information;
spatial-domain information;
power information;
whether data is transmittable on an RE occupied by the first reference signal; or
a transmission configuration.

In some embodiments, the power information includes at least one of:
transmit power of the first reference signal;
comparison information between transmit power of the first reference signal and transmit power of a first channel;
comparison information between transmit power of the first reference signal and transmit power of first data on a channel on which the first reference signal is transmitted;
comparison information between transmit power of the first reference signal and total power on a channel on which the first reference signal is transmitted; or
comparison information between transmit power of first data and total power.

In some embodiments, the comparison information includes a ratio of EPRE and/or a scale factor of the transmit power.

In some embodiments, the power information further includes a correspondence between transmit power of the first reference signal or comparison information related to transmit power of the first reference signal and a time-frequency resource.

In some embodiments, the first reference signal configuration includes configuration information of a first pattern of the first reference signal, wherein the first pattern is related to the first information of the first reference signal.

In some embodiments, the first pattern includes at least one of:
a resource allocation pattern of the first reference signal; or
a power allocation pattern of the first reference signal.

In some embodiments, the configuration information of the first pattern includes at least one of:
a pattern matrix of the first pattern;
a pattern configuration parameter of the first pattern; or
difference information of the first pattern relative to a second pattern.

In some embodiments, the transmission configuration includes at least one of:
a sequence type of the first reference signal; or
the number of ports corresponding to the first reference signal.

In some embodiments, the first AI configuration includes at least one of:
configuration information of functionality of an AI model;
configuration information of applicable characteristics of an AI model; or
configuration information of an AI model.

In some embodiments, the configuration information of the AI model includes a training parameter of the AI model.

In some embodiments, the training parameter of the AI model includes at least one of a model structure, a model initialization parameter, an optimizer, a learning rate, the number of training iterations, or a training dataset.

In some embodiments, the first configuration information is used to trigger the terminal device to use the first reference signal configuration and the first AI configuration.

In some embodiments, the second communication module 2710 is further configured to:
transmit second configuration information to the terminal device, wherein the second configuration information is used to indicate the first reference signal configuration, to trigger the terminal device to use the first reference signal configuration and use the first AI configuration based on the first mapping relationship.

In some embodiments, the second communication module 2710 is further configured to:
transmit third configuration information to the terminal device, wherein the third configuration information is used to indicate the first AI configuration, to trigger the terminal device to use the first AI configuration and use the first reference signal configuration based on the first mapping relationship.

In some embodiments, the second communication module 2710 is further configured to:
receive first reporting information from the terminal device, wherein the first reporting information is used to report a first capability of the terminal device, wherein the first capability is related to the first reference signal configuration and/or the first AI configuration.

In some embodiments, the first capability includes support for autonomous configuration of the first reference signal configuration by the terminal device.

In some embodiments, the first capability includes support for configuration of the first reference signal configuration by the terminal device.

In some embodiments, the first capability includes support for the first AI configuration by the terminal device.

In some embodiments, the first capability includes support for the first mapping relationship by the terminal device.

The network device 2700 in the embodiments of the present disclosure may implement the corresponding functions of the network device in the method embodiments. For the processes, functions, implementation methods, and beneficial effects corresponding to various modules (sub-modules, units, or assemblies) in the network device 2700, reference may be made to the corresponding descriptions in the method embodiments, which are not elaborated herein any further. It should be noted that the functions described for various modules (sub-modules, units, or assemblies) in the network device 2700 in the embodiments of the present disclosure may be implemented by different modules (sub-modules, units, or assemblies) or by the same module (sub-module, unit, or assembly).

FIG. 28 is a schematic structural diagram of a communication device 2800 according to some embodiments of the present disclosure. The communication device 2800 includes a processor 2810. The processor 2810 is configured to load one or more computer programs from a memory and run the one or more computer programs to cause the communication device 2800 to perform the methods in the embodiments of the present disclosure.

In some embodiments, the communication device 2800 further includes a memory 2820. The processor 2810 is configured to load one or more computer programs from the memory 2820 and run the one or more computer programs to cause the communication device 2800 to perform the methods in the embodiments of the present disclosure.

The memory 2820 may be a device independent of the processor 2810 or integrated in the processor 2810.

In some embodiments, the communication device 2800 further includes a transceiver 2830. The processor 2810 controls the transceiver 2830 to communicate with other devices, for example, transmitting information or data to other devices or receiving information or data from other devices.

The transceiver 2830 may include a transmitter and a receiver. The transceiver 2830 further includes one or more antennas.

In some embodiments, the communication device 2800 is the network device in the embodiments of the present disclosure, and may implement the corresponding processes, implemented by the network device, in various methods of the embodiments of the present disclosure, which is not elaborated herein for brevity.

In some embodiments, the communication device 2800 is the terminal device in the embodiments of the present disclosure, and may implement the corresponding processes, implemented by the terminal device, in various methods of the embodiments of the present disclosure, which is not elaborated herein for brevity.

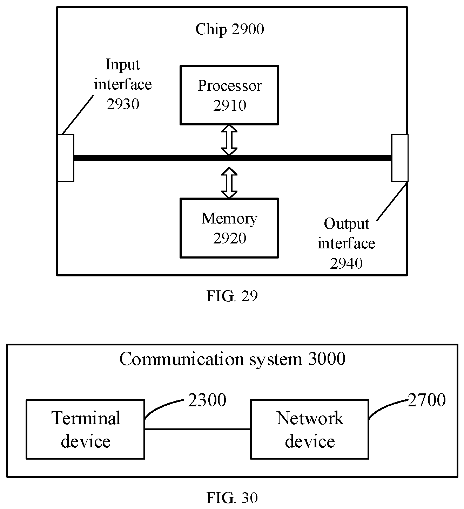

FIG. 29 is a schematic block diagram of a chip 2900 according to some embodiments of the present disclosure. The chip 2900 includes a processor 290, wherein the processor 2910 is configured to load one or more computer programs and run the one or more computer programs from a memory to perform the methods in the embodiments of the present disclosure.

In some embodiments, the chip 2900 further includes a memory 2920. The processor 2910 is configured to load one or more computer programs from the memory 2920 and run the one or more computer programs to perform the methods performed by the terminal device or the network device in the embodiments of the present disclosure.

The memory 2920 may be a device independent of the processor 2910 or integrated in the processor 2910.

In some embodiments, the chip 2900 further includes an input interface 2930. The processor 2910 controls the input interface 1630 to communicate with other devices or chips, for example, acquiring information or data from other devices or chips.

In some embodiments, the chip 2900 further includes an output interface 2940. The processor 1610 controls the output interface 2940 to communicate with other devices or chips, for example, outputting information or data to other devices or chips.

In some embodiments, the chip is applied in the network device in the embodiments of the present disclosure, and may implement the corresponding processes, implemented by the network device, in various methods of the embodiments of the present disclosure, which is not elaborated herein for brevity.

In some embodiments, the chip is applied in the terminal device in the embodiments of the present disclosure, and may implement the corresponding processes, implemented by the terminal device, in various methods of the embodiments of the present disclosure, which is not elaborated herein for brevity.

The chips applied to the network device and the terminal device are the same chip or different chips.

It is understandable that the chip mentioned in the embodiments of the present disclosure is also referred to as a system-level chip, a system chip, a chip system, a system-on-chip, or the like.

The processor mentioned above is a general processor, a digital signal processor (DSP), a field-programmable gate array (FPGA), an application-specific integrated circuit (ASIC), other programmable logic devices, transistor logic devices, or discrete hardware assemblies, or the like. The general processor mentioned above is a microprocessor, any conventional processor, or the like.

The memory mentioned above is a volatile memory or a non-volatile memory, or includes both the volatile memory and the non-volatile memory. The non-volatile memory is a read-only memory (ROM), a programmable ROM (PROM), an erasable PROM (EPROM), an electrically EPROM (EEPROM), or a flash memory. The volatile memory is a random access memory (RAM).

It is understandable that the above memory is exemplary but not for limitation. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), or the like. That is, the memory in the embodiments of the present disclosure is intend to include, but not limit to these and any other suitable type of memory.

FIG. 30 is a schematic block diagram of a communication system 3000 according to some embodiments of the present disclosure. The communication system 3000 includes a terminal device 2300 and a network device 2700.

The network device 2700 transmits first configuration information to a terminal device 2300, wherein the first configuration information is used for the terminal device 2300 to determine a first mapping relationship, wherein the first mapping relationship includes a mapping relationship between a first reference signal configuration and a first AI configuration.

The terminal device 2300 receives the first configuration information from the network device 2700.

The terminal device 2300 is configured to implement the corresponding functions achieved by the terminal device in the above method, and the network device 2700 is configured to implement the corresponding functions achieved by the network device in the above method, which are not elaborated herein any further for brevity.

All or part of the above embodiments may be implemented by software, hardware, firmware, or any combination thereof. All or part of the above embodiments, when implemented by software, may be implemented in the form of a computer program product. The computer program product includes one or more computer instructions. The one or more instructions, when loaded and run on a computer, all or part of the processes or functions in the embodiments of the present disclosure are generated. The computer is a general computer, a special-purpose computer, a computer network, or other programmable devices. The one or more computer instructions are stored in a computer-readable medium or transmitted from one computer-readable medium to another computer-readable medium. For example, the one or more computer instructions are transmitted from one network station, computer, server or data center in a wired manner (such as via a coaxial-cable, an optical fiber, or a digital subscriber line (DSL)) or in a wireless manner (such as via infrared, radio, or microwaves) to another network station, computer, server or data center. The computer-readable medium may be any available medium accessible by a computer or may be a data storage device including one or more servers, data centers or the like that are integrated with an available medium. The available medium may be a magnetic medium (e.g., a floppy disk, a hard disk, or a magnetic tape), an optical medium (e.g., a DVD), a semiconductor medium (e.g., a solid state disk (SSD)), or the like.

It is understandable that the serial numbers of the processes in various embodiments of the present disclosure do not represent the execution sequence among the processes. The execution sequence among the processes is determined based on the functions and internal logic thereof, and the implementation process of the embodiments of the present disclosure are not limited thereto.

A person skilled in the art may clearly understand that, for the specific working processes of the above-described system, device and unit, reference may be made to the corresponding processed in the above method embodiments, which are not repeated any further for the convenience and brevity of description.

Described above are specific embodiments of the present disclosure, and are not intended to limit the present disclosure. Within the technical scope disclosed in the present disclosure, any variations or replacements readily available to those skilled in the art should be encompassed within the scope of protection of the present disclosure. Accordingly, the scope of protection of the present disclosure should be subject to the scope of protection of the claims.

## Claims

1. A configuration method, performed by a terminal device, the method comprising:
receiving first configuration information from a network device, wherein the first configuration information is used for the terminal device to determine a first mapping relationship, wherein the first mapping relationship comprises a mapping relationship between a first reference signal configuration and a first artificial intelligence (AI) configuration.

2. The method according to claim 1, wherein the first configuration information comprises first indication information and second indication information, wherein the first indication information is used to indicate the first reference signal configuration, and the second indication information is used to indicate the first AI configuration.

3. The method according to claim 1, wherein the first configuration information comprises third indication information, wherein the third indication information is used to indicate the first mapping relationship.

4. The method according to claim 3, wherein the third indication information comprises an identifier (ID) of the first mapping relationship, wherein the ID of the first mapping relationship is associated with an ID of the first reference signal configuration and an ID of the first AI configuration.

5. The method according to any one of claims 1 to 4, wherein the first reference signal configuration is used to determine first information of the first reference signal, wherein the first information comprises at least one of:
time-domain information;
frequency-domain information;
code-domain information;
spatial-domain information;
power information;
whether data is transmittable on a resource element (RE) occupied by the first reference signal; or
a transmission configuration.

6. The method according to claim 5, wherein the power information comprises at least one of:
transmit power of the first reference signal;
comparison information between transmit power of the first reference signal and transmit power of a first channel;
comparison information between transmit power of the first reference signal and transmit power of first data on a channel on which the first reference signal is transmitted;
comparison information between transmit power of the first reference signal and total power on a channel on which the first reference signal is transmitted; or
comparison information between transmit power of first data and total power.

7. The method according to claim 6, wherein the comparison information comprises a ratio of energy per resource element (EPRE) and/or a scale factor of the transmit power.

8. The method according to any one of claims 5 to 7, wherein the power information further comprises a correspondence between transmit power of the first reference signal or comparison information related to transmit power of the first reference signal and a time-frequency resource.

9. The method according to any one of claims 5 to 8, wherein the first reference signal configuration comprises configuration information of a first pattern of the first reference signal, wherein the first pattern is related to the first information of the first reference signal.

10. The method according to claim 9, wherein the first pattern comprises at least one of:
a resource allocation pattern of the first reference signal; or
a power allocation pattern of the first reference signal.

11. The method according to claim 9 or 10, wherein the configuration information of the first pattern comprises at least one of:
a pattern matrix of the first pattern;
a pattern configuration parameter of the first pattern; or
difference information of the first pattern relative to a second pattern.

12. The method according to any one of claims 5 to 11, wherein the transmission configuration comprises at least one of:
a sequence type of the first reference signal; or
a number of ports corresponding to the first reference signal.

13. The method according to any one of claims 1 to 12, wherein the first AI configuration comprises at least one of:
configuration information of functionality of an AI model;
configuration information of applicable characteristics of an AI model; or
configuration information of an AI model.

14. The method according to claim 13, wherein the configuration information of the AI model comprises a training parameter of the AI model.

15. The method according to claim 14, wherein the training parameter of the AI model comprises at least one of a model structure, a model initialization parameter, an optimizer, a learning rate, a number of training iterations, or a training dataset.

16. The method according to any one of claims 1 to 15, further comprising:
associatively using the first reference signal configuration and the first AI configuration.

17. The method according to claim 16, wherein associatively using the first reference signal configuration and the first AI configuration comprises:
using the first reference signal configuration and the first AI configuration in a case where the terminal device has received the first configuration information.

18. The method according to claim 16, wherein associatively using the first reference signal configuration and the first AI configuration comprises:
using the first AI configuration based on the first mapping relationship in a case where the terminal device uses the first reference signal configuration.

19. The method according to claim 18, wherein using the first AI configuration based on the first mapping relationship in the case where the terminal device uses the first reference signal configuration comprises:
receiving second configuration information, wherein the second configuration information is used to indicate the first reference signal configuration; and
using the first reference signal configuration based on the second configuration information, and using the first AI configuration based on the first mapping relationship.

20. The method according to claim 16, wherein associatively using the first reference signal configuration and the first AI configuration comprises:
using the first reference signal configuration based on the first mapping relationship in a case where the terminal device uses the first AI configuration.

21. The method according to claim 20, wherein using the first reference signal configuration based on the first mapping relationship in the case where the terminal device uses the first AI configuration comprises:
receiving third configuration information, wherein the third configuration information is used to indicate the first AI configuration; and
using the first AI configuration based on the third configuration information, and using the first reference signal configuration based on the first mapping relationship.

22. The method according to any one of claims 1 to 21, further comprising:
transmitting first reporting information to the network device, wherein the first reporting information is used to report a first capability of the terminal device, wherein the first capability is related to the first reference signal configuration and/or the first AI configuration.

23. The method according to claim 22, wherein the first capability comprises support for autonomous configuration of the first reference signal configuration by the terminal device.

24. The method according to claim 22, wherein the first capability comprises support for configuration of the first reference signal configuration by the network device.

25. The method according to claim 23 or 24, wherein the terminal device supports the first AI configuration in a case where the terminal device has the first capability.

26. The method according to claim 22, wherein the first capability comprises support for the first AI configuration by the terminal device.

27. The method according to claim 26, wherein the terminal device supports the first reference signal configuration in a case where the terminal device has the first capability.

28. The method according to claim 22, wherein the first capability comprises support for the first mapping relationship by the terminal device.

29. The method according to claim 28, wherein the terminal device supports the first reference signal configuration and the first AI configuration in a case where the terminal device has the first capability.

30. The method according to any one of claims 1 to 29, further comprising:
switching to use a second reference signal configuration and/or a second AI configuration in a case where a duration of using the first reference signal configuration and the first AI configuration reaches a first duration.

31. The method according to claim 30, wherein switching to use the second reference signal configuration and/or the second AI configuration in the case where the duration of using the first reference signal configuration and the first AI configuration reaches the first duration comprises:
starting a first timer in a case where the terminal device starts to use the first reference signal configuration and the first AI configuration, wherein a timing duration of the first timer is the first duration; and
switching to use the second reference signal configuration and/or the second AI configuration in response to expiration of the first timer.

32. The method according to claim 30 or 31, wherein the second reference signal configuration is a reference signal configuration corresponding to a predetermined channel estimation algorithm or a default reference signal configuration.

33. The method according to claim 32, wherein a second reference signal corresponding to the default reference signal configuration comprises orthogonal reference signal symbols and non-orthogonal reference signal symbols.

34. The method according to any one of claims 1 to 29, further comprising:
monitoring whether a first condition is satisfied in a case where the terminal device uses the first reference signal configuration and the first AI configuration; and
switching to use a third reference signal configuration and/or a third AI configuration in a case where the first condition is satisfied.

35. The method according to claim 34, wherein the first condition is associated with a second mapping relationship, wherein the second mapping relationship comprises a mapping relationship between the third reference signal configuration and the third AI configuration.

36. A configuration method, performed by a network device, the method comprising:
transmitting first configuration information to a terminal device, wherein the first configuration information is used for the terminal device to determine a first mapping relationship, wherein the first mapping relationship comprises a mapping relationship between a first reference signal configuration and a first artificial intelligence (AI) configuration.

37. The method according to claim 36, wherein the first configuration information comprises first indication information and second indication information, wherein the first indication information is used to indicate the first reference signal configuration, and the second indication information is used to indicate the first AI configuration.

38. The method according to claim 36, wherein the first configuration information comprises third indication information, wherein the third indication information is used to indicate the first mapping relationship.

39. The method according to claim 38, wherein the third indication information comprises an identifier (ID) of the first mapping relationship, wherein the ID of the first mapping relationship is associated with an ID of the first reference signal configuration and an ID of the first AI configuration.

40. The method according to any one of claims 36 to 39, wherein the first reference signal configuration is used to determine first information of the first reference signal, wherein the first information comprises at least one of:
time-domain information;
frequency-domain information;
code-domain information;
spatial-domain information;
power information;
whether data is transmittable on a resource element (RE) occupied by the first reference signal; or
a transmission configuration.

41. The method according to claim 40, wherein the power information comprises at least one of:
transmit power of the first reference signal;
comparison information between transmit power of the first reference signal and transmit power of a first channel;
comparison information between transmit power of the first reference signal and transmit power of first data on a channel on which the first reference signal is transmitted;
comparison information between transmit power of the first reference signal and total power on a channel on which the first reference signal is transmitted; or
comparison information between transmit power of first data and total power.

42. The method according to claim 41, wherein the comparison information comprises a ratio of energy per resource element (EPRE) and/or a scale factor of the transmit power.

43. The method according to any one of claims 40 to 42, wherein the power information further comprises a correspondence between transmit power of the first reference signal or comparison information related to transmit power of the first reference signal and a time-frequency resource.

44. The method according to any one of claims 40 to 43, wherein the first reference signal configuration comprises configuration information of a first pattern of the first reference signal, wherein the first pattern is related to the first information of the first reference signal.

45. The method according to claim 44, wherein the first pattern comprises at least one of:
a resource allocation pattern of the first reference signal; or
a power allocation pattern of the first reference signal.

46. The method according to claim 44 or 45, wherein the configuration information of the first pattern comprises at least one of:
a pattern matrix of the first pattern;
a pattern configuration parameter of the first pattern; or
difference information of the first pattern relative to a second pattern.

47. The method according to any one of claims 40 to 45, wherein the transmission configuration comprises at least one of:
a sequence type of the first reference signal; or
a number of ports corresponding to the first reference signal.

48. The method according to any one of claims 36 to 47, wherein the first AI configuration comprises at least one of:
configuration information of functionality of an AI model;
configuration information of applicable characteristics of an AI model; or
configuration information of an AI model.

49. The method according to claim 48, wherein the configuration information of the AI model comprises a training parameter of the AI model.

50. The method according to claim 49, wherein the training parameter of the AI model comprises at least one of a model structure, a model initialization parameter, an optimizer, a learning rate, a number of training iterations, or a training dataset.

51. The method according to any one of claims 36 to 50, wherein the first configuration information is used to trigger the terminal device to use the first reference signal configuration and the first AI configuration.

52. The method according to any one of claims 36 to 50, further comprising:
transmitting second configuration information to the terminal device, wherein the second configuration information is used to indicate the first reference signal configuration, to trigger the terminal device to use the first reference signal configuration and use the first AI configuration based on the first mapping relationship.

53. The method according to any one of claims 36 to 50, further comprising:
transmitting third configuration information to the terminal device, wherein the third configuration information is used to indicate the first AI configuration, to trigger the terminal device to use the first AI configuration and use the first reference signal configuration based on the first mapping relationship.

54. The method according to any one of claims 36 to 53, further comprising:
receiving first reporting information from the terminal device, wherein the first reporting information is used to report a first capability of the terminal device, wherein the first capability is related to the first reference signal configuration and/or the first AI configuration.

55. The method according to claim 54, wherein the first capability comprises support for autonomous configuration of the first reference signal configuration by the terminal device.

56. The method according to claim 54, wherein the first capability comprises support for configuration of the first reference signal configuration by the network device.

57. The method according to claim 54, wherein the first capability comprises support for the first AI configuration by the terminal device.

58. The method according to claim 54, wherein the first capability comprises support for the first mapping relationship by the terminal device.

59. A terminal device, comprising:
a first communication module, configured to receive first configuration information from a network device, wherein the first configuration information is used for the terminal device to determine a first mapping relationship, wherein the first mapping relationship comprises a mapping relationship between a first reference signal configuration and a first artificial intelligence (AI) configuration.

60. The terminal device according to claim 59, wherein the first configuration information comprises first indication information and second indication information, wherein the first indication information is used to indicate the first reference signal configuration, and the second indication information is used to indicate the first AI configuration.

61. The terminal device according to claim 59, wherein the first configuration information comprises third indication information, wherein the third indication information is used to indicate the first mapping relationship.

62. The terminal device according to claim 61, wherein the third indication information comprises an identifier (ID) of the first mapping relationship, wherein the ID of the first mapping relationship is associated with an ID of the first reference signal configuration and an ID of the first AI configuration.

63. The terminal device according to any one of claims 59 to 62, wherein the first reference signal configuration is used to determine first information of the first reference signal, wherein the first information comprises at least one of:
time-domain information;
frequency-domain information;
code-domain information;
spatial-domain information;
power information;
whether data is transmittable on a resource element (RE) occupied by the first reference signal; or
transmission configuration.

64. The terminal device according to claim 63, wherein the power information comprises at least one of:
transmit power of the first reference signal;
comparison information between transmit power of the first reference signal and transmit power of a first channel;
comparison information between transmit power of the first reference signal and transmit power of first data on a channel on which the first reference signal is transmitted;
comparison information between transmit power of the first reference signal and total power on a channel on which the first reference signal is transmitted; or
comparison information between transmit power of first data and total power.

65. The terminal device according to claim 64, wherein the comparison information comprises a ratio of energy per resource element (EPRE) and/or a scale factor of the transmit power.

66. The terminal device according to any one of claims 63 to 65, wherein the power information further comprises a correspondence between transmit power of the first reference signal or comparison information related to transmit power of the first reference signal and a time-frequency resource.

67. The terminal device according to any one of claims 63 to 66, wherein the first reference signal configuration comprises configuration information of a first pattern of the first reference signal, wherein the first pattern is related to the first information of the first reference signal.

68. The terminal device according to claim 67, wherein the first pattern comprises at least one of:
a resource allocation pattern of the first reference signal; or
a power allocation pattern of the first reference signal.

69. The terminal device according to claim 67 or 68, wherein the configuration information of the first pattern comprises at least one of:
a pattern matrix of the first pattern;
a pattern configuration parameter of the first pattern; or
difference information of the first pattern relative to a second pattern.

70. The terminal device according to any one of claims 63 to 69, wherein the transmission configuration comprises at least one of:
a sequence type of the first reference signal; or
a number of ports corresponding to the first reference signal.

71. The terminal device according to any one of claims 59 to 70, wherein the first AI configuration comprises at least one of:
configuration information of functionality of an AI model;
configuration information of applicable characteristics of an AI model; or
configuration information of an AI model.

72. The terminal device according to claim 71, wherein the configuration information of the AI model comprises a training parameter of the AI model.

73. The terminal device according to claim 72, wherein the training parameter of the AI model comprises at least one of a model structure, a model initialization parameter, an optimizer, a learning rate, a number of training iterations, or a training dataset.

74. The terminal device according to any one of claims 59 to 73, wherein the terminal device further comprises a first processing module, wherein the first processing module is configured to:
associatively use the first reference signal configuration and the first AI configuration.

75. The terminal device according to claim 74, wherein the first processing module is further configured to:
use the first reference signal configuration and the first AI configuration in a case where the first configuration information has been received.

76. The terminal device according to claim 74, wherein the first processing module is further configured to:
use the first AI configuration based on the first mapping relationship in a case where the first reference signal configuration is received.

77. The terminal device according to claim 76, wherein
the first communication module is further configured to receive second configuration information, wherein the second configuration information is used to indicate the first reference signal configuration; and
the first processing module is further configured to use the first reference signal configuration based on the second configuration information, and use the first AI configuration based on the first mapping relationship.

78. The terminal device according to claim 74, wherein the first processing module is further configured to:
use the first reference signal configuration based on the first mapping relationship in a case where the first AI configuration is used.

79. The terminal device according to claim 78, wherein
the first communication module is further configured to receive third configuration information, wherein the third configuration information is used to indicate the first AI configuration; and
the first processing module is further configured to use the first AI configuration based on the third configuration information, and use the first reference signal configuration based on the first mapping relationship.

80. The terminal device according to any one of claims 59 to 79, wherein the first communication module is further configured to:
transmit first reporting information to a network device, wherein the first reporting information is used to report a first capability of the terminal device, wherein the first capability is related to the first reference signal configuration and/or the first AI configuration.

81. The terminal device according to claim 80, wherein the first capability comprises support for autonomous configuration of the first reference signal configuration.

82. The terminal device according to claim 80, wherein the first capability comprises support for configuration of the first reference signal configuration.

83. The terminal device according to claim 81 or 82, wherein the terminal device supports the first AI configuration in a case where the terminal device has the first capability.

84. The terminal device according to claim 80, wherein the first capability comprises support for the first AI configuration.

85. The terminal device according to claim 84, wherein the first processing module is further configured to support the first reference signal configuration in a case where the terminal device has the first capability.

86. The terminal device according to claim 80, wherein the first capability comprises support for the first mapping relationship.

87. The terminal device according to claim 86, wherein the terminal device supports the first reference signal configuration and the first AI configuration in a case where the terminal device has the first capability.

88. The terminal device according to any one of claims 59 to 87, wherein the terminal device further comprises a second processing module, wherein the second processing module is configured to:
switch to use a second reference signal configuration and/or a second AI configuration in a case where a duration of using the first reference signal configuration and the first AI configuration reaches a first duration.

89. The terminal device according to claim 88, wherein the second processing module is further configured to:
start a first timer in a case where the terminal device starts to use the first reference signal configuration and the first AI configuration, wherein a timing duration of the first timer is the first duration; and
switch to use the second reference signal configuration and/or the second AI configuration in response to expiration of the first timer.

90. The terminal device according to claim 88 or 89, wherein the second reference signal configuration is a reference signal configuration corresponding to a predetermined channel estimation algorithm or a default reference signal configuration.

91. The terminal device according to claim 90, wherein a second reference signal corresponding to the default reference signal configuration comprises orthogonal reference signal symbols and non-orthogonal reference signal symbols.

92. The terminal device according to any one of claims 59 to 87, wherein the terminal device further comprises a third processing module, wherein the third processing module is configured to:
monitor whether a first condition is satisfied in a case where the first reference signal configuration and the first AI configuration are used; and
switch to use a third reference signal configuration and/or a third AI configuration in a case where the first condition is satisfied.

93. The terminal device according to claim 92, wherein the first condition is associated with a second mapping relationship, wherein the second mapping relationship comprises a mapping relationship between the third reference signal configuration and the third AI configuration.

94. A network device, comprising:
a second communication module, configured to transmit first configuration information to a terminal device, wherein the first configuration information is used for the terminal device to determine a first mapping relationship, wherein the first mapping relationship comprises a mapping relationship between a first reference signal configuration and a first artificial intelligence (AI) configuration.

95. The network device according to claim 94, wherein the first configuration information comprises first indication information and second indication information, wherein the first indication information is used to indicate the first reference signal configuration, and the second indication information is used to indicate the first AI configuration.

96. The network device according to claim 94, wherein the first configuration information comprises third indication information, wherein the third indication information is used to indicate the first mapping relationship.

97. The network device according to claim 96, wherein the third indication information comprises an identifier (ID) of the first mapping relationship, wherein the ID of the first mapping relationship is associated with an ID of the first reference signal configuration and an ID of the first AI configuration.

98. The network device according to any one of claims 94 to 97, wherein the first reference signal configuration is used to determine first information of the first reference signal, wherein the first information comprises at least one of:
time-domain information;
frequency-domain information;
code-domain information;
spatial-domain information;
power information;
whether data is transmittable on a resource element (RE) occupied by the first reference signal; or
transmission configuration.

99. The network device according to claim 98, wherein the power information comprises at least one of:
transmit power of the first reference signal;
comparison information between transmit power of the first reference signal and transmit power of a first channel;
comparison information between transmit power of the first reference signal and transmit power of first data on a channel on which the first reference signal is transmitted;
comparison information between transmit power of the first reference signal and total power on a channel on which the first reference signal is transmitted; or
comparison information between transmit power of first data and total power.

100. The network device according to claim 99, wherein the comparison information comprises a ratio of energy per resource element (EPRE) and/or a scale factor of the transmit power.

101. The network device according to any one of claims 98 to 100, wherein the power information further comprises a correspondence between transmit power of the first reference signal or comparison information related to transmit power of the first reference signal and a time-frequency resource.

102. The network device according to any one of claims 98 to 101, wherein the first reference signal configuration comprises configuration information of a first pattern of the first reference signal, wherein the first pattern is related to the first information of the first reference signal.

103. The network device according to claim 102, wherein the first pattern comprises at least one of:
a resource allocation pattern of the first reference signal; or
a power allocation pattern of the first reference signal.

104. The network device according to claim 102 or 103, wherein the configuration information of the first pattern comprises at least one of:
a pattern matrix of the first pattern;
a pattern configuration parameter of the first pattern; or
difference information of the first pattern relative to a second pattern.

105. The network device according to any one of claims 98 to 103, wherein the transmission configuration comprises at least one of:
a sequence type of the first reference signal; or
a number of ports corresponding to the first reference signal.

106. The network device according to any one of claims 94 to 105, wherein the first AI configuration comprises at least one of:
configuration information of functionality of an AI model;
configuration information of applicable characteristics of an AI model; or
configuration information of an AI model.

107. The network device according to claim 106, wherein the configuration information of the AI model comprises a training parameter of the AI model.

108. The network device according to claim 107, wherein the training parameter of the AI model comprises at least one of a model structure, a model initialization parameter, an optimizer, a learning rate, a number of training iterations, or a training dataset.

109. The network device according to any one of claims 94 to 108, wherein the first configuration information is used to trigger the terminal device to use the first reference signal configuration and the first AI configuration.

110. The network device according to any one of claims 94 to 108, wherein the second communication module is further configured to:
transmit second configuration information to the terminal device, wherein the second configuration information is used to indicate the first reference signal configuration, to trigger the terminal device to use the first reference signal configuration and use the first AI configuration based on the first mapping relationship.

111. The network device according to any one of claims 94 to 108, wherein the second communication module is further configured to:
transmit third configuration information to the terminal device, wherein the third configuration information is used to indicate the first AI configuration, to trigger the terminal device to use the first AI configuration and use the first reference signal configuration based on the first mapping relationship.

112. The network device according to any one of claims 94 to 111, wherein the second communication module is further configured to:
receive first reporting information from the terminal device, wherein the first reporting information is used to report a first capability of the terminal device, wherein the first capability is related to the first reference signal configuration and/or the first AI configuration.

113. The network device according to claim 112, wherein the first capability comprises support for autonomous configuration of the first reference signal configuration by the terminal device.

114. The network device according to claim 112, wherein the first capability comprises support for configuration of the first reference signal configuration by the network device.

115. The network device according to claim 112, wherein the first capability comprises support for the first AI configuration by the terminal device.

116. The network device according to claim 112, wherein the first capability comprises support for the first mapping relationship by the terminal device.

117. A terminal device, comprising: a transceiver, a processor, and a memory; wherein the memory is configured to store one or more computer programs, the transceiver is configured to communicate with other devices, and the processor is configured to call and run the one or more computer programs stored in the memory to cause the terminal device to receive first configuration information from a network device, wherein the first configuration information is used for the terminal device to determine a first mapping relationship, wherein the first mapping relationship comprises a mapping relationship between a first reference signal configuration and a first artificial intelligence (AI) configuration.

118. The terminal device according to claim 117, wherein the first configuration information comprises first indication information and second indication information, wherein the first indication information is used to indicate the first reference signal configuration, and the second indication information is used to indicate the first AI configuration.

119. The terminal device according to claim 117, wherein the first configuration information comprises third indication information, wherein the third indication information is used to indicate the first mapping relationship.

120. The terminal device according to claim 119, wherein the third indication information comprises an identifier (ID) of the first mapping relationship, wherein the ID of the first mapping relationship is associated with an ID of the first reference signal configuration and an ID of the first AI configuration.

121. The terminal device according to any one of claims 117 to 120, wherein the first reference signal configuration is used to determine first information of the first reference signal, wherein the first information comprises at least one of:
time-domain information;
frequency-domain information;
code-domain information;
spatial-domain information;
power information;
whether data is transmittable on a resource element (RE) occupied by the first reference signal; or
transmission configuration.

122. The terminal device according to claim 121, wherein the power information comprises at least one of:
transmit power of the first reference signal;
comparison information between transmit power of the first reference signal and transmit power of a first channel;
comparison information between transmit power of the first reference signal and transmit power of first data on a channel on which the first reference signal is transmitted;
comparison information between transmit power of the first reference signal and total power on a channel on which the first reference signal is transmitted; or
comparison information between transmit power of first data and total power.

123. The terminal device according to claim 122, wherein the comparison information comprises a ratio of energy per resource element (EPRE) and/or a scale factor of the transmit power.

124. The terminal device according to any one of claims 121 to 123, wherein the power information further comprises a correspondence between transmit power of the first reference signal or comparison information related to transmit power of the first reference signal and a time-frequency resource.

125. The terminal device according to any one of claims 121 to 124, wherein the first reference signal configuration comprises configuration information of a first pattern of the first reference signal, wherein the first pattern is related to the first information of the first reference signal.

126. The terminal device according to claim 125, wherein the first pattern comprises at least one of:
a resource allocation pattern of the first reference signal; or
a power allocation pattern of the first reference signal.

127. The terminal device according to claim 125 or 126, wherein the configuration information of the first pattern comprises at least one of:
a pattern matrix of the first pattern;
a pattern configuration parameter of the first pattern; or
difference information of the first pattern relative to a second pattern.

128. The terminal device according to any one of claims 121 to 127, wherein the transmission configuration comprises at least one of:
a sequence type of the first reference signal; or
a number of ports corresponding to the first reference signal.

129. The terminal device according to any one of claims 117 to 128, wherein the first AI configuration comprises at least one of:
configuration information of functionality of an AI model;
configuration information of applicable characteristics of an AI model; or
configuration information of an AI model.

130. The terminal device according to claim 129, wherein the configuration information of the AI model comprises a training parameter of the AI model.

131. The terminal device according to claim 130, wherein the training parameter of the AI model comprises at least one of a model structure, a model initialization parameter, an optimizer, a learning rate, a number of training iterations, or a training dataset.

132. The terminal device according to any one of claims 117 to 131, wherein the processor is further configured to cause the terminal device to:
associatively use the first reference signal configuration and the first AI configuration.

133. The terminal device according to claim 132, wherein the processor is further configured to cause the terminal device to:
use the first reference signal configuration and the first AI configuration in a case where the first configuration information has been received.

134. The terminal device according to claim 132, wherein the processor is further configured to cause the terminal device to:
use the first AI configuration based on the first mapping relationship in a case where the first reference signal configuration is used.

135. The terminal device according to claim 134, wherein the processor is further configured to cause the terminal device to:
receive second configuration information, wherein the second configuration information is used to indicate the first reference signal configuration; and
use the first reference signal configuration based on the second configuration information, and use the first AI configuration based on the first mapping relationship.

136. The terminal device according to claim 132, wherein the processor is further configured to cause the terminal device to:
use the first reference signal configuration based on the first mapping relationship in a case where the first AI configuration is used.

137. The terminal device according to claim 136, wherein the processor is further configured to cause the terminal device to:
receive third configuration information, wherein the third configuration information is used to indicate the first AI configuration; and
use the first AI configuration based on the third configuration information, and use the first reference signal configuration based on the first mapping relationship.

138. The terminal device according to any one of claims 117 to 137, wherein the processor is further configured to cause the terminal device to:
transmit first reporting information to the network device, wherein the first reporting information is used to report a first capability of the terminal device, wherein the first capability is related to the first reference signal configuration and/or the first AI configuration.

139. The terminal device according to claim 138, wherein the first capability comprises support for autonomous configuration of the first reference signal configuration by the terminal device.

140. The terminal device according to claim 138, wherein the first capability comprises support for configuration of the first reference signal configuration by the network device.

141. The terminal device according to claim 139 or 140, wherein the terminal device supports the first AI configuration in a case where the terminal device has the first capability.

142. The terminal device according to claim 138, wherein the first capability comprises support for the first AI configuration by the terminal device.

143. The terminal device according to claim 142, wherein the terminal device supports the first reference signal configuration in a case where the terminal device has the first capability.

144. The terminal device according to claim 138, wherein the first capability comprises support for the first mapping relationship by the terminal device.

145. The terminal device according to claim 144, wherein the terminal device supports the first reference signal configuration and the first AI configuration in a case where the terminal device has the first capability.

146. The terminal device according to any one of claims 117 to 145, wherein the processor is further configured to cause the terminal device to:
switch to use a second reference signal configuration and/or a second AI configuration in a case where a duration of using the first reference signal configuration and the first AI configuration reaches a first duration.

147. The terminal device according to claim 146, wherein the processor is further configured to cause the terminal device to:
start a first timer in a case where the terminal device starts to use the first reference signal configuration and the first AI configuration, wherein a timing duration of the first timer is the first duration; and
switch to use the second reference signal configuration and/or the second AI configuration in response to expiration of the first timer.

148. The terminal device according to claim 146 or 147, wherein the second reference signal configuration is a reference signal configuration corresponding to a predetermined channel estimation algorithm, or a default reference signal configuration.

149. The terminal device according to claim 148, wherein a second reference signal corresponding to the default reference signal configuration comprises orthogonal reference signal symbols and non-orthogonal reference signal symbols.

150. The terminal device according to any one of claims 117 to 145, wherein the processor is further configured to cause the terminal device to:
monitor whether a first condition is satisfied in a case where the first reference signal configuration and the first AI configuration are used; and
switch to use a third reference signal configuration and/or a third AI configuration in a case where the first condition is satisfied.

151. The terminal device according to claim 150, wherein the first condition is associated with a second mapping relationship, wherein the second mapping relationship comprises a mapping relationship between the third reference signal configuration and the third AI configuration.

152. A network device, comprising: a transceiver, a processor, and a memory; wherein the memory configured to store one or more computer programs, the transceiver is configured to communicate with other devices, and the processor is configured to call and run the one or more computer programs stored in the memory to cause the terminal device to transmit first configuration information to a terminal device, wherein the first configuration information is used for the terminal device to determine a first mapping relationship, wherein the first mapping relationship comprises a mapping relationship between a first reference signal configuration and a first artificial intelligence (AI) configuration.

153. The network device according to claim 152, wherein the first configuration information comprises first indication information and second indication information, wherein the first indication information is used to indicate the first reference signal configuration, and the second indication information is used to indicate the first AI configuration.

154. The network device according to claim 152, wherein the first configuration information comprises third indication information, wherein the third indication information is used to indicate the first mapping relationship.

155. The network device according to claim 154, wherein the third indication information comprises an identifier (ID) of the first mapping relationship, wherein the ID of the first mapping relationship is associated with an ID of the first reference signal configuration and an ID of the first AI configuration.

156. The network device according to any one of claims 152 to 155, wherein the first reference signal configuration is used to determine first information of the first reference signal, wherein the first information comprises at least one of:
time-domain information;
frequency-domain information;
Code-domain information;
spatial-domain information;
power information;
whether data is transmittable on a resource element (RE) occupied by the first reference signal; or
transmission configuration.

157. The network device according to claim 156, wherein the power information comprises at least one of:
transmit power of the first reference signal;
comparison information between transmit power of the first reference signal and transmit power of a first channel;
comparison information between transmit power of the first reference signal and transmit power of first data on a channel on which the first reference signal is transmitted;
comparison information between transmit power of the first reference signal and total power on a channel on which the first reference signal is transmitted; or
comparison information between transmit power of first data and total power.

158. The network device according to claim 157, wherein the comparison information comprises a ratio of energy per resource element (EPRE) and/or a scale factor of the transmit power.

159. The network device according to any one of claims 156 to 158, wherein the power information further comprises a correspondence between transmit power of the first reference signal or comparison information related to transmit power of the first reference signal and a time-frequency resource.

160. The network device according to any one of claims 156 to 159, wherein the first reference signal configuration comprises configuration information of a first pattern of the first reference signal, wherein the first pattern is related to the first information of the first reference signal.

161. The network device according to claim 160, wherein the first pattern comprises at least one of:
a resource allocation pattern of the first reference signal; or
a power allocation pattern of the first reference signal.

162. The network device according to claim 160 or 161, wherein the configuration information of the first pattern comprises at least one of:
a pattern matrix of the first pattern;
a pattern configuration parameter of the first pattern; or
difference information of the first pattern relative to a second pattern.

163. The network device according to any one of claims 156 to 161, wherein the transmission configuration comprises at least one of:
a sequence type of the first reference signal; or
a number of ports corresponding to the first reference signal.

164. The network device according to any one of claims 152 to 163, wherein the first AI configuration comprises at least one of:
configuration information of functionality of an AI model;
configuration information of applicable characteristics of an AI model; or
configuration information of an AI model.

165. The network device according to claim 164, wherein the configuration information of the AI model comprises a training parameter of the AI model.

166. The network device according to claim 165, wherein the training parameter of the AI model comprises at least one of a model structure, a model initialization parameter, an optimizer, a learning rate, a number of training iterations, or a training dataset.

167. The network device according to any one of claims 152 to 166, wherein the first configuration information is used to trigger the terminal device to use the first reference signal configuration and the first AI configuration.

168. The network device according to any one of claims 152 to 166, wherein the processor is further configured to cause the network device to:
transmit second configuration information to the terminal device, wherein the second configuration information is used to indicate the first reference signal configuration, to trigger the terminal device to use the first reference signal configuration and use the first AI configuration based on the first mapping relationship.

169. The network device according to any one of claims 152 to 166, wherein the processor is further configured to cause the network device to:
transmit third configuration information to the terminal device, wherein the third configuration information is used to indicate the first AI configuration, to trigger the terminal device to use the first AI configuration and use the first reference signal configuration based on the first mapping relationship.

170. The network device according to any one of claims 152 to 169, wherein the processor is further configured to cause the network device to:
receive first reporting information from the terminal device, wherein the first reporting information is used to report a first capability of the terminal device, wherein the first capability is related to the first reference signal configuration and/or the first AI configuration.

171. The network device according to claim 170, wherein the first capability comprises support for autonomous configuration of the first reference signal configuration by the terminal device.

172. The network device according to claim 170, wherein the first capability comprises support for configuration of the first reference signal configuration by the network device.

173. The network device according to claim 170, wherein the first capability comprises support for the first AI configuration by the terminal device.

174. The network device according to claim 170, wherein the first capability comprises support for the first mapping relationship by the terminal device.

175. A chip, comprising: a processor, wherein the processor is configured to call and run one or more computer programs from a memory to cause a device equipped with the chip to perform the method as defined any one of claims 1 to 35.

176. A chip, comprising: a processor, wherein the processor is configured to call and run one or more computer programs from a memory to cause a device equipped with the chip to perform the method as defined any one of claims 36 to 58.

177. A computer-readable storage medium, configured to store one or more computer programs, wherein the one or more computer programs, when loaded and run by a device, cause the device to perform the method as defined in any one of claims 1 to 35.

178. A computer-readable storage medium, configured to store one or more computer programs, wherein the one or more computer programs, when loaded and run by a device, cause the device to perform the method as defined in any one of claims 36 to 58.

179. A computer program product, comprising: one or more computer program instructions, wherein the one or more computer program instructions, when loaded and executed by a computer, cause computer to perform the method as defined in any one of claims 1 to 35.

180. A computer program product, comprising: one or more computer program instructions, wherein the one or more computer program instructions, when loaded and executed by a computer, cause the computer to perform the method as defined in any one of claims 36 to 58.

181. A computer program, configured to be loaded and run by a computer, to cause the cause a computer to perform the method as defined in any one of claims 1 to 35.

182. A computer program, configured to be loaded and run by a computer, to cause the computer to perform the method as defined in any one of claims 36 to 58.

183. A communication system, comprising:
a terminal device, configured to perform the method as defined in any one of claims 1 to 35; and
a network device, configured to perform the method as defined in any one of claims 36 to 58.
